# EUROPEAN PATENT APPLICATION

(11) **EP 4 362 136 A1**
(43) Date of publication of application: **01.05.2024**
(21) Application number: 22947126.3
(22) Date of filing: 20.06.2022
(51) Int. Cl.: H01M 4/58, H01M 4/36, H01M 10/0525, H01M 10/058

(54) **POSITIVE ELECTRODE ACTIVE MATERIAL HAVING CORE-SHELL STRUCTURE AND PREPARATION METHOD THEREFOR, POSITIVE ELECTRODE SHEET, SECONDARY BATTERY, BATTERY MODULE, BATTERY PACK, AND ELECTRICAL APPARATUS**

(71) Applicant: Contemporary Amperex Technology Co., Limited, Ningde, Fujian 352100 (CN)
(72) Inventor: JIANG, Yao, Ningde, Fujian 352100 (CN); OUYANG, Chuying, Ningde, Fujian 352100 (CN); ZHANG, Xinxin, Ningde, Fujian 352100 (CN); XU, Bo, Ningde, Fujian 352100 (CN); DENG, Bin, Ningde, Fujian 352100 (CN); WANG, Zhiqiang, Ningde, Fujian 352100 (CN); YUAN, Tianci, Ningde, Fujian 352100 (CN); CHEN, Shangdong, Ningde, Fujian 352100 (CN)
(74) Representative: Kraus & Lederer PartGmbB
(86) International application number: PCT/CN2022/099868
(87) International publication number: WO 2023/245345

(57) **Abstract**

This application provides a positive electrode active material and a preparation method thereof, a positive electrode plate, a secondary battery, a battery module, a battery pack, and an electric apparatus. The positive electrode active material includes a core containing LiₘAₓMn_{1-y}B_{y}P_{1-z}C_{z}O₄₋ₙDₙ, a first coating layer enveloping the core and containing a crystalline pyrophosphate LiₐMP₂O₇ and/or M_{b}(P₂O₇)_{c}, a second coating layer enveloping the first coating layer and containing an oxide M'_{d}Oₑ, and a third coating layer enveloping the second coating layer and containing carbon. The positive electrode active material of this application can reduce Li/Mn anti-site defects produced, reduce dissolving-out amount of manganese, lower the lattice change rate, increase the capacity of the secondary battery, and improve the cycling performance, high-temperature storage performance, and safety performance of the secondary battery.

## Description

### TECHNICAL FIELD

This application relates to the field of secondary battery technologies, and in particular to a positive electrode active material having a core-shell structure, a preparation method of such positive electrode active material, a positive electrode plate, a secondary battery, a battery module, a battery pack, and an electric apparatus.

### BACKGROUND

In recent years, with increasingly wide use of secondary batteries, secondary batteries have been widely used in energy storage power supply systems such as hydroelectric, thermal, wind, and solar power plants, and many other fields including electric tools, electric bicycles, electric motorcycles, electric vehicles, military equipment, and aerospace. Due to great development of secondary batteries, higher requirements are imposed on energy density, cycling performance, safety performance, and the like of secondary batteries. Lithium manganese phosphate, as the existing positive electrode active material of the secondary battery, is prone to Li/Mn anti-site defects and large dissolving-out amount of manganese during charge and discharge, which affects the gram capacity of the secondary battery and leads to deterioration of the safety performance and cycling performance of the secondary battery.

### SUMMARY

This application is carried out in view of the preceding subject with a purpose to provide a positive electrode active material having a core-shell structure, a preparation method of positive electrode active material, a positive electrode plate, a secondary battery, a battery module, a battery pack, and an electric apparatus, so as to solve the Li/Mn anti-site defects and large dissolving-out amount of manganese that are easily produced in the existing lithium manganese phosphate positive electrode active material during charge and discharge, thereby solving the problems of low capacity and poor safety performance and cycling performance of the secondary battery.

To achieve the preceding purpose, a first aspect of this application provides a positive electrode active material having a core-shell structure, where the positive electrode active material includes a core and a shell enveloping the core;
the core containing LiₘAₓMn_{1-y}B_{y}P_{1-z}C_{z}O₄₋ₙDₙ, where m is selected from any value in the range of 0.9 to 1.1, x is selected from any value in the range of 0.001 to 0.1, y is selected from any value in the range of 0.001 to 0.6, or optionally selected from any value in the range of 0.001 to 0.5, z is selected from any value in the range of 0.001 to 0.1, n is selected from any value in the range of 0.001 to 0.1, A is selected from one or more elements of Zn, Al, Na, K, Mg, Nb, Mo, and W, or optionally selected from one or more elements of Al, Mg, Nb, Mo, and W, B is selected from one or more elements of Ti, V, Zr, Fe, Ni, Mg, Co, Ga, Sn, Sb, Nb, and Ge, or optionally selected from one or more elements of Ti, V, Fe, Ni, Mg, and Co, C is selected from one or more elements of B, S, Si, and N, or optionally selected from one or more elements of S, Si, and N, and D is selected from one or more elements of S, F, Cl, and Br, or optionally selected from one or more elements of F, Cl, and Br; and
the shell including a first coating layer enveloping the core, a second coating layer enveloping the first coating layer, and a third coating layer enveloping the second coating layer; where
the first coating layer contains a crystalline pyrophosphate LiₐMP₂O₇ and/or M_{b}(P₂O₇)_{c}, where a is greater than 0 and less than or equal to 2, b is any value in the range of 1 to 4, c is any value in the range of 1 to 3, and each M in the crystalline pyrophosphates LiₐMP₂O₇ and M_{b}(P₂O₇)_{c} is independently selected from one or more elements of Fe, Ni, Mg, Co, Cu, Zn, Ti, Ag, Zr, Nb, and Al, or optionally selected from one or more elements of Fe, Ni, Mg, Co, Cu, Zn, Ti, Ag, Zr, and Al;
the second coating layer contains an oxide M'_{d}Oₑ, where d is greater than 0 and less than or equal to 2, e is greater than 0 and less than or equal to 5, M' is selected from one or more elements of alkali metals, alkaline earth metals, transition metals, group IIIA elements, group IVA elements, lanthanide elements, and Sb, optionally selected from one or more elements of Li, Be, B, Na, Mg, Al, Si, P, S, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La, and Ce, or more optionally selected from one or more elements of Mg, Al, Ca, Ti, V, Co, Ni, Cu, Zn, and Zr; and
the third coating layer contains carbon.

The inventors of this application have found in actual operation that the lithium manganese phosphate positive electrode active material is prone to Li/Mn anti-site defects and large dissolving-out amount of manganese during deep charge and discharge. The dissolved manganese is reduced to metal manganese after migrating to the negative electrode. The metal manganese produced is equivalent to "catalyst", which can catalyze the decomposition of SEI (solid electrolyte interphase, solid electrolyte interphase) on the surface of the negative electrode. Part of the by-products produced is gas, which can easily lead to the swelling of the battery and affect the safety performance of the secondary battery. The other part of the by-products produced is deposited on the surface of the negative electrode, which obstructs the passage of lithium ions into and out of the negative electrode, causing an increase in the impedance of the secondary battery and affecting the kinetic performance and cycling performance of the battery. In addition, to supplement the lost SEI, the electrolyte and the active lithium inside the battery are continuously consumed, which has irreversible effects on the capacity retention rate of the secondary battery.

Based on this, the applicant fortuitously found that a new type of positive electrode active material having a core-shell structure is provided by doping elements A, B, C, and D at the Li site, the manganese site, the phosphorus site, and the O site of lithium manganese phosphate to obtain a doped lithium manganese phosphate core and to form three coatings on the core surface, which can greatly reduce the Li/Mn anti-site defects produced, significantly reduce the dissolving-out amount of manganese, decrease the lattice change rate, and increase the compacted density. Applying such material to a secondary battery can increase the capacity of the secondary battery and improve the cycling performance, high-temperature storage performance, and safety performance of the secondary battery. The oxide in the second coating layer has high structural stability and low surface activity, so with the second coating layer coated, the interfacial side reactions can be effectively reduced, thereby improving the high-temperature cycling performance and high-temperature storage performance of the battery.

In this specification, the crystalline means that the crystallinity is higher than 50%, to be specific, 50% to 100%. A crystallinity lower than 50% is called glassy state.

The crystalline pyrophosphate of this application has a crystallinity of 50% to 100%. The pyrophosphate with a specific crystallinity is not only conducive to giving full play to the ability of the pyrophosphate coating layer to hinder the manganese dissolution and reducing the interfacial side reactions, but also enables the pyrophosphate coating layer and the oxide coating layer to be better lattice matched, such that a tight bond between the coating layers can be achieved.

Unless otherwise stated, in the chemical formula LiₘAₓMn_{1-y}B_{y}P_{1-z}C_{z}O₄₋ₙDₙ, under the condition that A is more than two elements, the above-mentioned limitation on the range of x is not only a limitation on the stoichiometric number of each element as A, but also a limitation on the sum of the stoichiometric numbers of each element as A. For example, when A is two or more elements A1, A2, ..., and An, the stoichiometric numbers x1, x2, ..., and xn of all of A1, A2, ..., and An shall fall within the value range defined by this application for y, and the sum of x1, x2, ..., and xn shall also fall within the value range. Similarly, in a case that B, C, and D each are two or more elements, the limitation on the value ranges of the stoichiometric numbers of B, C, and D in this application also have the foregoing meaning.

Unless otherwise stated, in the chemical formula M_{b}(P₂O₇)_{c}, under the condition that M is more than two elements, the above-mentioned limitation on the range of b is not only a limitation on the stoichiometric number of each element as M, but also a limitation on the sum of the stoichiometric numbers of each element as M. For example, under the condition that M is more than two elements M1, M2, ..., and Mn, the stoichiometric numbers b1, b2, ..., and bn of each of M1, M2, ..., and Mn each shall fall within the range defined by this application for y, and the sum of b1, b2, ..., and bn shall also fall within the range. Similarly, under the condition that M' in the chemical formula M'_{d}Oₑ is more than two elements, the limitation on the range of the stoichiometric numbers d of M' in this application also has the preceding meaning.

In any embodiment of the first aspect, the crystalline pyrophosphate in the first coating layer has an interplanar spacing in the range of 0.293 nm to 0.470 nm and an included angle in the range of 18.00° to 32.00° in the [111] crystal orientation;
optionally, the crystalline pyrophosphate in the first coating layer has an interplanar spacing in the range of 0.300 nm to 0.310 nm; and/or
the crystalline pyrophosphate in the first coating layer has an included angle in the range of 29.00° to 30.00° in the [111] crystal orientation.

The first coating layer in the positive electrode active material of this application uses crystalline substances whose interplanar spacing and included angle range are in the foregoing ranges. In this way, the heterophase structures in the coating layer can be effectively avoided, thereby increasing the gram capacity of the material and improving the cycling performance and rate performance of the secondary battery.

In any embodiment of the first aspect, x is any value in the range of 0.001 to 0.005; and/or
y is any value in the range of 0.01 to 0.5, or optionally any value in the range of 0.25 to 0.5; and/or
z is any value in the range of 0.001 to 0.005; and/or
n is any value in the range of 0.001 to 0.005.

In this way, with x, y, z, n in the foregoing ranges, the Li/Mn anti-site defects produced can be further reduced, the dissolving-out amount of manganese is reduced, and the lattice change rate is decreased, further increasing the capacity of the secondary battery and improving the cycling performance, high-temperature storage performance, and safety performance of the secondary battery.

In any embodiment of the first aspect, a ratio of 1-y to y in the core ranges from 0.67 to 999, optionally from 1 to 4, or more optionally from 1.5 to 3. This further improves the cycling performance and rate performance of the secondary battery.

In any embodiment of the first aspect, a ratio of m to x in the core ranges from 9 to 1100, or optionally from 190 to 998. This further improves the cycling performance and rate performance of the secondary battery.

In any embodiment of the first aspect, carbon in the third coating layer is a mixture of SP2 carbon and SP3 carbon; and optionally a molar ratio of SP2 carbon to SP3 carbon is any value in the range of 0.07 to 13, more optionally any value in the range of 0.1 to 10, or further optionally any value in the range of 2.0 to 3.0.

This application improves the comprehensive performance of the secondary battery by limiting the molar ratio of SP2 carbon to SP3 carbon to the foregoing range.

In any embodiment of the first aspect, based on a weight of the core, a coating amount of the first coating layer is greater than 0 and less than or equal to 6wt%, optionally greater than 0 and less than or equal to 5.5wt%, or further optionally greater than 0 and less than or equal to 2wt%; and/or
based on the weight of the core, a coating amount of the second coating layer is greater than 0 and less than or equal to 6wt%, optionally greater than 0 and less than or equal to 5.5wt%, or further optionally from 2wt% to 4wt%; and/or
based on the weight of the core, a coating amount of the third coating layer is greater than 0 and less than or equal to 6wt%, optionally greater than 0 and less than or equal to 5.5wt%, or further optionally greater than 0 and less than or equal to 2wt%.

In the positive electrode active material having the core-shell structure of this application, the coating amounts of the three coating layers are preferably within the foregoing ranges, and therefore the core can be fully enveloped and the kinetic performance and safety performance of the secondary battery can be further improved without reducing the gram capacity of the positive electrode active material.

In any embodiment of the first aspect, a thickness of the first coating layer is in the range of 1 nm to 10 nm. In this application, under the condition that the thickness of the first coating layer is in the range of 1 nm to 10 nm, the dissolution and migration of transition metal ions can be further reduced and the kinetic performance of the secondary battery can be improved.

In any embodiment of the first aspect, a thickness of the second coating layer ranges from 2 nm to 25 nm, or optionally from 2 nm to 15 nm. Under the condition that the thickness of the second coating layer is in the foregoing range, the second coating layer has a stable surface structure and small side reactions with the electrolyte, such that the interfacial side reactions can be effectively mitigated, thereby improving the high-temperature performance of the secondary battery.

In any embodiment of the first aspect, a thickness of the third coating layer is in the range of 2 nm to 25 nm. Under the condition that the thickness of the third coating layer is in the range of 2 nm to 25 nm, the electrical conductivity of the material can be improved and the compacted density performance of the battery electrode prepared using the positive electrode active material can be increased.

In any embodiment of the first aspect, based on a weight of the positive electrode active material,
a content of element manganese is in the range of 10wt% to 35wt%, optionally in the range of 13.3wt% to 33.2wt%, more optionally in the range of 15wt% to 30wt%, or further optionally in the range of 17wt% to 20wt%; and/or
a content of element phosphorus is in the range of 12wt% to 25wt%, optionally in the range of 15wt% to 20wt%, or more optionally in the range of 16.8wt% to 19.5wt%; and
optionally, a weight ratio of element manganese to element phosphorus is in the range of 0.71 to 1.85, more optionally in the range of 0.90 to 1.25, or further optionally in the range of 0.95 to 1.20.

In the positive electrode active material having a core-shell structure of this application, limiting the content of element manganese in the foregoing range can effectively improve the structural stability and density of the positive electrode active material, thus improving the performance of the secondary battery such as cycling, storage, and compacted density; and can maintain a specific voltage plateau height, thus increasing the energy density of the secondary battery.

In the positive electrode active material having a core-shell structure of this application, limiting the content of element phosphorus in the foregoing range can effectively improve the conductivity of the positive electrode active material and can enhance the structural stability of the positive electrode active material.

In the positive electrode active material having a core-shell structure of this application, limiting the weight ratio of element manganese to element phosphorus in the foregoing range can reduce the dissolution of transition metal so as to improve the stability of the positive electrode active material and the cycling and storage performance of the secondary battery, and can maintain a specific discharge voltage plateau height so as to increase the energy density of the secondary battery.

In any embodiment of the first aspect, a lattice change rate of the positive electrode active material before and after complete deintercalation of lithium is lower than 8.1%, optionally lower than 4%, more optionally lower than 3.8%, or further optionally from 2.0% to 3.8%.

The positive electrode active material having a core-shell structure of this application can achieve a lattice change rate lower than 8.1% (optionally lower than 4%) before and after deintercalation of lithium. Therefore, the use of the positive electrode active material can improve the gram capacity and rate performance of the secondary battery.

In any embodiment of the first aspect, a Li/Mn anti-site defect concentration of the positive electrode active material is lower than 4%, more optionally lower than 2.2%, or further optionally from 1.5% to 2.2%. Limiting the Li/Mn anti-site defect concentration in the foregoing range can motivate the Li⁺ transport, increase the gram capacity of the positive electrode active material, and improve the rate performance of the secondary battery.

In any embodiment of the first aspect, a compacted density of the positive electrode active material under 3 tons is greater than 1.98 g/cm³, optionally greater than 2.2 g/cm³, or more optionally greater than 2.2 g/cm³ and less than 2.8 g/cm³. Therefore, increasing the compacted density increases the weight of the positive electrode active material per unit volume, which is conducive to increasing the volumetric energy density of the secondary battery.

In any embodiment of the first aspect, a surface oxygen valence of the positive electrode active material is lower than -1.90, or optionally from -1.90 to -1.98. Therefore, limiting the surface oxygen valence of the positive electrode active material in the foregoing range can mitigate the interfacial side reactions between the positive electrode material and the electrolyte, thereby improving the performance of the cell in terms of cycling, high temperature storage, and the like and suppressing gas production.

A second aspect of this application provides a preparation method of positive electrode active material, including the following steps:
a step of providing a core material: the core material containing LiₘAₓMn_{1-y}B_{y}P_{1-z}C_{z}O₄₋ₙDₙ, where m is selected from any value in the range of 0.9 to 1.1, x is selected from any value in the range of 0.001 to 0.1, y is selected from any value in the range of 0.001 to 0.6, or optionally selected from any value in the range of 0.001 to 0.5, z is selected from any value in the range of 0.001 to 0.1, n is selected from any value in the range of 0.001 to 0.1, A is selected from one or more elements of Zn, Al, Na, K, Mg, Nb, Mo, and W, or optionally selected from one or more elements of Al, Mg, Nb, Mo, and W, B is selected from one or more elements of Ti, V, Zr, Fe, Ni, Mg, Co, Ga, Sn, Sb, Nb, and Ge, or optionally selected from one or more elements of Ti, V, Fe, Ni, Mg, and Co, C is selected from one or more elements of B, S, Si, and N, or optionally selected from one or more elements of S, Si, and N, and D is selected from one or more elements of S, F, Cl, and Br, or optionally selected from one or more elements of F, Cl, and Br; and
a first enveloping step: providing a first mixture containing a pyrophosphate LiₐMP₂O₇ and/or M_{b}(P₂O₇)_{c}, and mixing the core material and the first mixture for drying and sintering to obtain a material enveloped by a first coating layer, where a is greater than 0 and less than or equal to 2, b is any value in the range of 1 to 4, c is any value in the range of 1 to 3, and each M in the pyrophosphates LiₐMP₂O₇ and M_{b}(P₂O₇)_{c} is independently selected from one or more elements of Fe, Ni, Mg, Co, Cu, Zn, Ti, Ag, Zr, Nb, and Al, or optionally selected from one or more elements of Fe, Ni, Mg, Co, Cu, Zn, Ti, Ag, Zr, and Al;
a second enveloping step: providing a second mixture containing an oxide M'_{d}Oₑ, and mixing the material coated by the first coating layer and the second mixture for drying and sintering to obtain a material enveloped by two coating layers, where d is greater than 0 and less than or equal to 2, e is greater than 0 and less than or equal to 5, M' is selected from one or more elements of alkali metals, alkaline earth metals, transition metals, group IIIA elements, group IVA elements, lanthanide elements, and Sb, optionally selected from one or more elements of Li, Be, B, Na, Mg, Al, Si, P, S, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La, and Ce, or more optionally selected from one or more elements of Mg, Al, Ca, Ti, V, Co, Ni, Cu, Zn, and Zr; and
a third enveloping step: providing a third mixture containing a source of carbon, and mixing the material enveloped by the two coating layers and the third mixture for drying and sintering to obtain a positive electrode active material;
where the positive electrode active material has a core-shell structure including the core and a shell enveloping the core, the core containing LiₘAₓMn_{1-y}B_{y}P_{1-z}C_{z}O₄₋ₙDₙ, the shell including the first coating layer enveloping the core, a second coating layer enveloping the first coating layer, and a third coating layer enveloping the second coating layer, the first coating layer containing a crystalline pyrophosphate LiₐMP₂O₇ and/or M_{b}(P₂O₇)_{c}, the second coating layer containing an oxide M'_{d}Oₑ, and the third coating layer containing carbon.

Based on this, in this application, a new type of positive electrode active material having a core-shell structure is provided by doping elements A, B, C, and D at the Li site, the manganese site, the phosphorus site, and the O site of lithium manganese phosphate to obtain a doped lithium manganese phosphate core and to form three coating layers on the core surface, which can greatly reduce the Li/Mn anti-site defects produced, significantly reduce the dissolving-out amount of manganese, decrease the lattice change rate, and increase the compacted density. Applying such material to a secondary battery can increase the capacity of the secondary battery and improve the cycling performance, high-temperature storage performance, and safety performance of the secondary battery.

In any embodiment of the second aspect of this application, the step of providing a core material includes the following steps:
step (1): mixing a source of manganese, a source of element B, an acid, and an optional solvent to obtain a mixture; and
step (2): mixing the mixture with a source of lithium, a source of phosphorus, a source of element A, a source of element C, a source of element D, and an optional solvent for drying and sintering to obtain the core material containing LiₘAₓMn_{1-y}B_{y}P_{1-z}C_{z}O₄₋ₙDₙ.

In any embodiment of the second aspect of this application, in step (1), mixing is carried out at 60°C to 120°C; and/or, in the step (1), mixing is carried out by stirring at 200 rpm to 800 rpm.

In any embodiment of the second aspect of this application, in step (2), mixing is carried out for 8 hours to 15 hours.

In any embodiment of the second aspect of this application, in step (2), sintering is carried out at 600°C to 900°C for 6 hours to 14 hours.

In any embodiment of the second aspect of this application,
in the first enveloping step, a first mixture is obtained by mixing a source of element M, a source of phosphorus, an acid, an optional source of lithium, and an optional solvent; and/or
in the second enveloping step, a second mixture is obtained by mixing a source of element M' and a solvent; and/or
in the third enveloping step, a third mixture is obtained by mixing a source of carbon and a solvent.

In any embodiment of the second aspect of this application, in the first enveloping step, the source of element M, the source of phosphorus, the acid, the optional source of lithium, and the optional solvent are mixed at room temperature for 1h to 5h, then heated to 50°C to 120°C and kept at this temperature for mixing for 2h to 10h, the foregoing mixing all being carried out at pH 3.5 to pH 6.5.

In any embodiment of the second aspect of this application, in the second enveloping step, the source of element M' and the solvent are mixed at room temperature for 1h to 10h, then heated to 60°C to 150°C and kept at this temperature for mixing for 2h to 10h.

In any embodiment of the second aspect of this application, the source of element A is selected from one or more of monomer, oxide, phosphate, oxalate, carbonate, and sulfate of element A; and/or
the source of element B is selected from one or more of monomer, oxide, phosphate, oxalate, carbonate, and sulfate of element B; and/or
the source of element C is selected from one or more of sulfate, borate, nitrate, and silicate of element C; and/or
the source of element D is selected from one or more of monomer and ammonium salt of element D.

In any embodiment of the second aspect of this application, in the first enveloping step, sintering is carried out at 650°C to 800°C for 2 hours to 6 hours; and/or
in the second enveloping step, the sintering is carried out at 500°C to 700°C for 6 hours to 10 hours; and/or
in the third enveloping step, the sintering is carried out at 700°C to 800°C for 6 hours to 10 hours.

A third aspect of this application provides a positive electrode plate including a positive electrode current collector and a positive electrode film layer provided on at least one surface of the positive electrode current collector, where the positive electrode film layer includes the positive electrode active material according to the first aspect of this application or a positive electrode active material prepared by the preparation method according to the second aspect of this application; or optionally, based on a total weight of the positive electrode film layer, a content of the positive electrode active material in the positive electrode film layer is 90wt% to 99.5wt%, or more optionally 95wt% to 99.5wt%.

A fourth aspect of this application provides a secondary battery, including the positive electrode active material according to the first aspect of this application or the positive electrode active material prepared by using the preparation method according to the second aspect of this application or the positive electrode plate according to the third aspect of this application.

A fifth aspect of this application provides a battery module, including the secondary battery according to the fourth aspect of this application.

A sixth aspect of this application provides a battery pack, including the battery module according to the fifth aspect of this application.

A seventh aspect of this application provides an electric apparatus, including at least one selected from the secondary battery according to the fourth aspect of this application, the battery module according to the fifth aspect of this application, and the battery pack according to the sixth aspect of this application.

### BRIEF DESCRIPTION OF DRAWINGS

FIG. 1 is a schematic diagram of a positive electrode active material having a three-layer-enveloped structure according to an embodiment of this application.
FIG. 2 is a schematic diagram of a secondary battery according to an embodiment of this application.
FIG. 3 is an exploded view of the secondary battery according to the embodiment of this application in FIG. 2.
FIG. 4 is a schematic diagram of a battery module according to an embodiment of this application.
FIG. 5 is a schematic diagram of a battery pack according to an embodiment of this application.
FIG. 6 is an exploded view of the battery pack according to the embodiment of this application in FIG. 5.
FIG. 7 is a schematic diagram of an electric apparatus using a secondary battery as a power source according to an embodiment of this application.

Description of reference signs:
1. battery pack; 2. upper box body; 3. lower box body; 4. battery module; 5. secondary battery; 51. housing; 52. electrode assembly; and 53. top cover assembly.

### DESCRIPTION OF EMBODIMENTS

The following specifically discloses embodiments of a positive electrode active material, and a preparation method of positive electrode active material, a positive electrode plate, a secondary battery, a battery module, a battery pack, and an electric apparatus in this application with appropriate reference to detailed descriptions of accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

The ranges "less/lower than a value" and "greater/higher than a value" in this application indicate the range limited by the value as an upper or lower limit.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed sequentially or randomly, and preferably, are performed sequentially. For example, a method including steps (a) and (b) indicates that the method may include steps (a) and (b) performed in order or may include steps (b) and (a) performed in order. For example, the above-mentioned method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

If there is no special description, in this application, the term "coating layer" is a material layer enveloping the core, the material layer can completely or partially envelope the core, and the use of "coating layer" is only for ease of description but not intended to limit the present invention.

Unless otherwise stated, in this application, the term "thickness of the coating layer" refers to a thickness of the substance layer applied on the core in a radial direction of the core.

### [Secondary battery]

Secondary batteries, also referred to as rechargeable batteries or storage batteries, are batteries whose active material can be activated for continuous use through charging after the batteries are discharged.

Generally, a secondary battery includes a positive electrode plate, a negative electrode plate, a separator, and an electrolyte. During charge and discharge of the battery, active ions (for example, lithium ions) intercalate and deintercalate back and forth between the positive electrode plate and the negative electrode plate. The separator is sandwiched between the positive electrode plate and the negative electrode plate to mainly prevent short circuit between the positive and negative electrodes and to allow active ions to pass through. The electrolyte is between the positive electrode plate and the negative electrode plate, playing a role of conducting active ions.

### [Positive electrode active material]

This application provides a positive electrode active material having a core-shell structure. The positive electrode active material includes a core and a shell enveloping the core;
the core containing LiₘAₓMn_{1-y}B_{y}P_{1-z}C_{z}O₄₋ₙDₙ, where m is selected from any value in the range of 0.9 to 1.1, x is selected from any value in the range of 0.001 to 0.1 (for example, 0.002, 0.003, 0.005, 0.05), y is selected from any value in the range of 0.001 to 0.6, or optionally selected from any value in the range of 0.001 to 0.5, z is selected from any value in the range of 0.001 to 0.1 (for example, 0.005, 0.04, 0.05, 0.08), n is selected from any value in the range of 0.001 to 0.1 (for example, 0.002, 0.005, 0.01, 0.05, 0.08), A is selected from one or more elements of Zn, Al, Na, K, Mg, Nb, Mo, and W, or optionally selected from one or more elements of Al, Mg, Nb, Mo, and W, B is selected from one or more elements of Ti, V, Zr, Fe, Ni, Mg, Co, Ga, Sn, Sb, Nb, and Ge, or optionally selected from one or more elements of Ti, V, Fe, Ni, Mg, and Co, C is selected from one or more elements of B, S, Si, and N, or optionally selected from one or more elements of S, Si, and N, and D is selected from one or more elements of S, F, Cl, and Br, or optionally selected from one or more elements of F, Cl, and Br; and
the shell including a first coating layer enveloping the core, a second coating layer enveloping the first coating layer, and a third coating layer enveloping the second coating layer; where
the first coating layer contains a crystalline pyrophosphate LiₐMP₂O₇ and/or M_{b}(P₂O₇)_{c}, where a is greater than 0 and less than or equal to 2, b is any value in the range of 1 to 4, c is any value in the range of 1 to 3, and each M in the crystalline pyrophosphates LiₐMP₂O₇ and M_{b}(P₂O₇)_{c} is independently selected from one or more elements of Fe, Ni, Mg, Co, Cu, Zn, Ti, Ag, Zr, Nb, and Al, or optionally selected from one or more elements of Fe, Ni, Mg, Co, Cu, Zn, Ti, Ag, Zr, and Al;
the second coating layer contains an oxide M'_{d}Oₑ (optionally crystalline oxide M'_{d}Oₑ), where d is greater than 0 and less than or equal to 2, e is greater than 0 and less than or equal to 5, M' is selected from one or more elements of alkali metals, alkaline earth metals, transition metals, group IIIA elements, group IVA elements, lanthanide elements, and Sb, optionally selected from one or more elements of Li, Be, B, Na, Mg, Al, Si, P, S, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La, and Ce, or more optionally selected from one or more elements of Mg, Al, Ca, Ti, V, Co, Ni, Cu, Zn, and Zr; and
the third coating layer contains carbon.

The positive electrode active material of this application can improve the gram capacity, cycling performance, and safety performance of the secondary battery. Although the mechanism is still unclear, it is presumed that the positive electrode active material of this application is a core-shell structure. Doping elements A, B, C, D respectively on the Li site, the manganese site, the phosphorus site, and the O site of the lithium manganese phosphate core can not only effectively reduce the dissolving-out amount of manganese, reduce the manganese ions migrated to the negative electrode, reduce the electrolyte consumed due to the decomposition of the SEI, and improve the cycling performance and safety performance of the secondary battery, but also promote the adjustment of the Mn-O bond, lower the migration barrier of lithium ions, promote the migration of lithium ions, and improve the rate performance of the secondary battery. Coating the first coating layer including crystalline pyrophosphate on the core can further increase the migration resistance of manganese, reduce the dissolving-out amount of manganese, decrease the content of impurity lithium on the surface, and reduce the contact between the core and the electrolyte, thereby reducing interfacial side reactions, reducing gas produced, and improving high-temperature storage performance, cycling performance, and safety performance of the secondary battery. Further coating the crystalline oxide coating layer with high stability can effectively reduce the interfacial side reactions on the surface of the positive electrode active material, thus improving the high-temperature cycling and storage performance of the secondary battery. Further coating the carbon layer as the third coating layer can further improve the safety performance and kinetic performance of the secondary battery. In addition, in the core, the lattice change rate is decreased through Li- and Mn-site doping. Mn-site doping also effectively reduces the surface activity, thus suppressing Mn dissolution and the interfacial side reactions between the positive electrode active material and the electrolyte. P-site doping makes the change rate of Mn-O bond length faster, and lowers the small-polaron migration barrier, which is beneficial to the electronic conductivity. O-site doping has a good effect on reducing the interfacial side reactions. The of P- and O-site doping also affects the Mn dissolution in the anti-site defects and kinetic performance. Therefore, doping reduces the concentration of anti-site defects in the material, improves the kinetic performance and gram capacity of the material, and also changes the morphology of the particles, thereby increasing the compacted density.

Unless otherwise stated, in the chemical formula LiₘAₓMn_{1-y}B_{y}P_{1-z}C_{z}O₄₋ₙDₙ, under the condition that A is more than two elements, the above-mentioned limitation on the range of x is not only a limitation on the stoichiometric number of each element as A, but also a limitation on the sum of the stoichiometric numbers of each element as A. For example, when A is two or more elements A1, A2, ..., and An, the stoichiometric numbers x1, x2, ..., and xn of all of A1, A2, ..., and An shall fall within the value range defined by this application for y, and the sum of x1, x2, ..., and xn shall also fall within the value range. Similarly, in a case that B, C, D each are two or more elements, the limitation on the value ranges of the stoichiometric numbers of B, C, D in this application also have the foregoing meaning.

In some embodiments, under the condition that A is selected from one, two, three, or four elements of Zn, Al, Na, K, Mg, Nb, Mo, and W, Aₓ is Qₓ₁Hₓ₂Eₓ₃Kₓ₄, where x1+x2+x3+x4=x, and x1, x2, x3, and x4 are all positive and not both zero, and Q, H, E, and K are each independently selected from one of Zn, Al, Na, K, Mg, Nb, Mo, and W. Optionally, one of x1, x2, x3, and x4 is zero and the rests are not zero; more optionally, two of x1, x2, x3, and x4 are zero and the rests are not zero; or further optionally, three of x1, x2, x3, and x4 are zero and the rest is not zero. In the core LiₘAₓMn_{1-y}B_{y}P_{1-z}C_{z}O₄₋ₙDₙ, it is advantageous to dope one, two, three, or four of the preceding elements A at the manganese site, or optionally dope one, two, or three of the preceding elements A; and furthermore, it is advantageous to dope one or two of elements B at the Mn site, dope one or two of elements C at the phosphorus site, dope one or two of elements D at the O site, which facilitates a uniform distribution of the doping elements.

In some embodiments, the values of m, x, y, z, and n satisfy the condition that the entire core is made electrically neutral.

In the core LiₘAₓMn_{1-y}B_{y}P_{1-z}C_{z}O₄₋ₙDₙ, the magnitude of m is influenced by the magnitude of the valences of A, B, C, and D and the magnitudes of x, y, z, and n so as to ensure that the entire system is electrically neutral. If the value of m is too small, the content of lithium of the entire core system decreases, which affects the gram capacity extractability of the material. The values of x, y, z, and n limit the total amount of all doping elements. An excessively low doping amount makes the doping elements useless, and y being more than 0.6 leads to less Mn content in the system and affects the voltage plateau of the material. Element C dopes at the P site. Because the P-O tetrahedron is relatively stable and a too-large value of z affects the stability of the material, the value of z is limited in the range of 0.001 to 0.1.

In addition, the entire core system is made electrically neutral, which can ensure that there are as few defects and heterophase structures in the positive electrode active material as possible. If there is an excess of transition metal (for example, manganese) present in the positive electrode active material, the excess transition metal is likely to precipitate out as an elementary substance or form heterophase structures inside the lattice due to the inherently stable structure of the material system. Therefore, making the system electrically neutral can minimize such heterophase structures. In addition, ensuring the electrical neutrality of the system can also lead to lithium vacancies in the material in some cases, resulting in better kinetic performance.

Process control (for example, mixing and grinding of the material sources) can ensure that the elements are uniformly distributed in the lattice without aggregation. The positions of the main characteristic peaks in the XRD plots of lithium manganese phosphate doped with elements are consistent with those of undoped LiMnPO₄, indicating that no heterophase structure was introduced in the doping process. Therefore, the improvement on the performance of the core mainly comes from element doping rather than heterophase structures. After the positive electrode active material is prepared, the inventors of this application cut the middle region of the prepared positive electrode active material particles by focused ion beam (FIB for short). Tests conducted through transmission electron microscope (TEM for short) and X-ray energy spectrum analysis (EDS for short) show that the elements are uniformly distributed without aggregation.

In some embodiments, the values of a, b, c, d, and e satisfy the condition that the crystalline pyrophosphate LiₐMP₂O₇ or M_{b}(P₂O₇)_{c} and M'_{d}Oₑ are made electrically neutral.

In some embodiments, the crystalline means that the crystallinity is higher than 50%, to be specific, 50% to 100%. A crystallinity lower than 50% is called glassy state. The crystalline pyrophosphate of this application has a crystallinity of 50% to 100%. The pyrophosphate with a specific crystallinity is not only conducive to giving full play to the ability of the pyrophosphate coating layer to hinder the manganese dissolution and reducing the interfacial side reactions, but also enables the pyrophosphate coating layer and the oxide coating layer to be better lattice matched, such that a tighter bond between the coating layers can be achieved.

In some embodiments, the crystallinity of the crystalline pyrophosphate in the first coating layer material of the positive electrode active material can be tested by using conventional technical means in the art, for example, by using density, infrared spectroscopy, differential scanning calorimetry, and nuclear magnetic resonance absorption methods, and also by, for example, X-ray diffraction.

A specific method of testing the crystallinity of the crystalline pyrophosphate in the first coating layer of the positive electrode active material by using X-ray diffraction can include the following steps:
taking a specific amount of positive electrode active material powder; measuring a total scattering intensity by X-ray, where the total scattering intensity is a sum of scattering intensities of substances in the entire space and is only related to intensities of primary rays, a chemical structure of the positive electrode active material powder, the total number of electrons participating in the diffraction, that is, mass, but not related to the order state of the sample; and separating the crystalline scattering from the non-crystalline scattering in the diffractogram, where the crystallinity is a ratio of the intensity of the crystalline scattering part to the total scattering intensity.

It should be noted that in some embodiments, the crystallinity of the pyrophosphate in the coating layer can be adjusted, for example, by adjusting the process conditions of the sintering process, for example, sintering temperature and sintering time.

In some embodiments, metal ions are difficult to migrate in the pyrophosphate, and therefore the pyrophosphate, as the first coating layer, can effectively isolate doping metal ions from the electrolyte. The crystalline pyrophosphate has a stable structure, so coating with the crystalline pyrophosphate can effectively suppress the dissolution of transition metals and improve the cycling performance.

In some embodiments, the bond between the first coating layer and the core is similar to a heterojunction, and the firmness of the bond is limited by the degree of lattice match. Under the condition that the lattice mismatch is below 5%, the lattice match is better and the two are easily bound tightly. The tight bond can ensure that the coating layer does not detach from the core in the subsequent cycle process, which is beneficial to ensure the long-term stability of the material. The degree of bond between the first coating layer and the core is mainly measure by calculating the degree of mismatch between the core and each lattice constant of the coating. In this application, compared with the core doped with no elements, the core doped with elements has an increased match with the first coating layer, and the core can be more tightly bonded to the pyrophosphate coating layer.

The oxide is selected as the second coating layer because it has a relatively high lattice match with the first coating layer crystalline pyrophosphate (the mismatch is only 3%), and in addition, the oxide itself has better stability than the pyrophosphate. Therefore, using the oxide for enveloping the pyrophosphate is beneficial to improve the stability of the material. The oxide has a stable structure, and therefore using the oxide for enveloping can effectively reduce the interfacial side reactions on the surface of the positive electrode active material, thereby improving the high-temperature cycling and storage performance of the secondary battery. The lattice match between the second coating layer and the first coating layer is, for example, similar to the bond between the first coating layer and the core. Under the condition that the lattice mismatch is below 5%, the lattice match is better, and the second coating layer and the first coating layer are easily bonded tightly.

The main reason for selecting carbon as the third coating layer is that the carbon layer has better electronic conductivity. Because the electrochemical reactions of carbon applied in secondary batteries requires the participation of electrons, to promote the electron transport between particles and the electron transport at different positions on the particles, carbon with excellent electrical conductivity can be used for enveloping. Carbon enveloping can effectively improve the electrical conductivity and desolvation of the positive electrode active material.

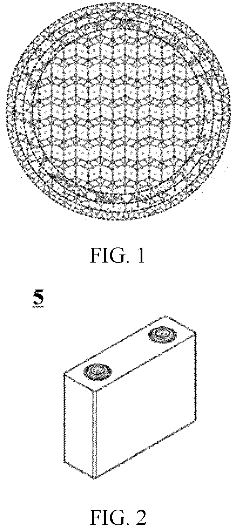

FIG. 1 is a schematic diagram of an ideal positive electrode active material having a three-layer-enveloped structure. As shown in the figure, the innermost circle schematically represents the core, followed by the first coating layer, the second coating layer, and the third coating layer in turn from the inside to the outside. The diagram represents the ideal state in which each layer is fully enveloped. In practice, each coating layer may be fully or partially enveloped.

In some embodiments, the crystalline pyrophosphate in the first coating layer has an interplanar spacing in the range of 0.293 nm to 0.470 nm and an included angle in the range of 18.00° to 32.00° in the [111] crystal orientation;
optionally, the crystalline pyrophosphate in the first coating layer has an interplanar spacing in the range of 0.300 nm to 0.310 nm (for example, 0.303 nm); and/or
the crystalline pyrophosphate in the first coating layer has an included angle in the range of 29.00° to 30.00° (for example, 29.496°) in the [111] crystal orientation.

The crystalline pyrophosphate in the first coating layer may be characterized by means of conventional technical means in the art, or may be characterized, for example, by means of transmission electron microscopy (TEM). Under the TEM, the core and the coating layer can be distinguished by measuring the interplanar spacing.

The specific test method of the interplanar spacing and included angle of the crystalline pyrophosphate in the first coating layer can include the following steps:
taking a specific amount of enveloped positive electrode active material sample powder in a test tube, injecting the test tube with a solvent such as alcohol, and stirring and dispersing the mixture thoroughly; then taking an appropriate amount of the resulting solution with a clean disposable plastic pipette, and dropping the solution on a 300-mesh copper grid, part of the powder remaining on the copper grid at this point; and transferring the copper grid together with the sample to the TEM sample cavity for testing, obtaining an original picture under the TEM test, and saving the original picture.

The original picture obtained in the TEM test is opened in the diffractometer software, Fourier transform is performed to get a diffraction pattern, a distance from a diffraction spot to the center of the diffraction pattern is measured to get the interplanar spacing, and the included angle is calculated according to the Bragg equation.

The crystalline pyrophosphate having the interplanar spacing and included angle in the preceding ranges can more effectively suppress the lattice change rate and Mn dissolution of the lithium manganese phosphate during deintercalation of lithium, thereby enhancing the high-temperature cycling performance, cycling stability, and high-temperature storage performance of the secondary battery.

In some embodiments, x is any value in the range of 0.001 to 0.005; and/or
y is any value in the range of 0.01 to 0.5, or optionally any value in the range of 0.25 to 0.5; and/or
z is any value in the range of 0.001 to 0.005; and/or
n is any value in the range of 0.001 to 0.005.

In this way, with x, y, z, n in the foregoing ranges, the Li/Mn anti-site defects produced can be further reduced, the dissolving-out amount of manganese is reduced, and the lattice change rate is decreased, further increasing the capacity of the secondary battery and improving the cycling performance, high-temperature storage performance, and safety performance of the secondary battery.

In some embodiments, a ratio of 1-y to y in the core ranges from 0.67 to 999, optionally from 1 to 4, or more optionally from 1.5 to 3. This further improves the cycling performance and rate performance of the secondary battery. Herein, y denotes the sum of the stoichiometric numbers of element B doping at Mn site. The energy density and cycling performance of the secondary battery using positive electrode active material can be further improved when the preceding conditions are met.

In some embodiments, a ratio of m to x in the core ranges from 9 to 1100, or optionally from 190 to 998. Herein, z denotes the sum of the stoichiometric numbers of element C doping at P site. The energy density and cycling performance of the secondary battery using positive electrode active material can be further improved when the preceding conditions are met.

In some embodiments, carbon in the third coating layer is a mixture of SP2 carbon and SP3 carbon; and optionally a molar ratio of SP2 carbon to SP3 carbon is any value in the range of 0.07 to 13, more optionally any value in the range of 0.1 to 10, or further optionally any value in the range of 2.0 to 3.0.

In some embodiments, a molar ratio of SP2 carbon to SP3 carbon may be about 0.1, about 0.2, about 03, about 0.4, about 0.5, about 0.6, about 0.7, about 0.8, about 0.9, about 1, about 2, about 3, about 4, about 5, about 6, about 7, about 8, about 9, or about 10, or in any range of any of these values.

In this application, a value of "about" indicates a range of ±10% of that value.

By selecting the morphology of carbon in the carbon coating layer, the overall electrical performance of the secondary battery can be improved. Specifically, by using a mixture of SP2 carbon and SP3 carbon and limiting the ratio of SP2 carbon to SP3 carbon to a certain range, good electrical conductivity can be achieved and the passage of lithium ions can be ensured, so it is beneficial to realize functions and cycling performance of the secondary battery.

The mixing ratio of SP2 carbon to SP3 carbon of the third coating layer can be controlled by sintering conditions such as sintering temperature and sintering time. For example, under the condition that sucrose is used as the source of carbon for preparing the third coating layer, the sucrose is deposited on the second coating layer after pyrolysis, and under the action of high temperature, a carbon coating layer with both SP3 carbon and SP2 carbon is produced. The ratio of SP2 carbon to SP3 carbon can be controlled by selecting the pyrolysis and sintering conditions.

The structure and characteristics of the third coating layer carbon can be measured by Raman (Raman) spectroscopy, and the specific test method is as follows: splitting the energy spectrum of the Raman test to obtain Id/Ig (where Id is a peak intensity of SP3 carbon and Ig is a peak intensity of SP2 carbon), and then determining the molar ratio therebetween.

In some embodiments, based on a weight of the core, a coating amount of the first coating layer is greater than 0 and less than or equal to 6wt%, optionally greater than 0 and less than or equal to 5.5wt%, or further optionally greater than 0 and less than or equal to 2wt%; and/or
based on the weight of the core, a coating amount of the second coating layer is greater than 0 and less than or equal to 6wt%, optionally greater than 0 and less than or equal to 5.5wt%, or further optionally from 2wt% to 4wt%; and/or
based on the weight of the core, a coating amount of the third coating layer is greater than 0 and less than or equal to 6wt%, optionally greater than 0 and less than or equal to 5.5wt%, or further optionally greater than 0 and less than or equal to 2wt%.

In this application, the coating amount of each layer is not zero.

In the positive electrode active material having the core-shell structure of this application, the coating amounts of the three coating layers are preferably within the foregoing ranges, and therefore the core can be fully enveloped and the kinetic performance and safety performance of the secondary battery can be further improved without reducing the gram capacity of the positive electrode active material.

Limiting the coating amount of the first coating layer in the foregoing range can reduce the dissolving-out amounts of transition metals and ensure the smooth migration of lithium ions, thereby improving the rate performance of the positive electrode active material.

Limiting the coating amount of the second coating layer in the foregoing range can maintain a specific platform voltage of the positive electrode active material and ensure the coating effect.

For the third coating layer, the carbon enveloping mainly promotes the electron transfer between the particles. However, because the structure also contains a large amount of amorphous carbon, the density of carbon is low. The compacted density of the electrode plate can be ensured by limiting the coating amount in the foregoing range.

In some embodiments, a thickness of the first coating layer ranges from 1 nm to 10 nm; and/or
a thickness of the second coating layer ranges from 2 nm to 25 nm, or optionally from 2 nm to 15 nm; and/or
a thickness of the third coating layer ranges from 2 nm to 25 nm.

In some embodiments, the thickness of the first coating layer may be about 2 nm, about 3 nm, about 4 nm, about 5 nm, about 6 nm, about 7 nm, about 8 nm, about 9 nm, or about 10 nm, or in any range of any of these values.

In some embodiments, the thickness of the second coating layer may be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm or about 15 nm, or in any range of any of these values.

In some embodiments, the thickness of the third coating layer may be about 2 nm, about 3 nm, about 4 nm, about 5 nm, about 6 nm, about 7 nm, about 8 nm, about 9 nm, about 10 nm, about 11 nm, about 12 nm, about 13 nm, about 14 nm, about 15 nm, about 16 nm, about 17 nm, about 18 nm, about 19 nm, about 20 nm, about 21 nm, about 22 nm, about 23 nm, about 24 nm, or about 25 nm, or in any range of any of these values.

Under the condition that the thickness of the first coating layer is in the range of 1 nm to 10 nm, the dissolving-out amounts of the transition metals can be effectively reduced and the kinetic performance of the secondary battery can be ensured.

Under the condition that the thickness of the second coating layer is in the foregoing range, the second coating layer has a stable surface structure and small side reactions with the electrolyte, such that the interfacial side reactions can be effectively mitigated, thereby improving the high-temperature performance of the secondary battery.

Under the condition that the thickness of the third coating layer is in the range of 2 nm to 25 nm, the electrical conductivity of the material can be improved and the compacted density performance of the battery electrode prepared using the positive electrode active material can be increased.

The thickness of the coating layer is measured mainly by FIB, and the specific method can include the following steps: randomly selecting a single particle from the positive electrode active material powder to be tested, cutting a thin slice with a thickness of about 100 nm from the middle of the selected particle or near the middle, and performing TEM test on the thin slice to measure the thickness of the coating layer where the measurement is performed for 3 to 5 positions and an average value is taken.

In some embodiments, based on the weight of the positive electrode active material, a content of element manganese is in the range of 10wt% to 35wt%, optionally in the range of 13.3wt% to 33.2wt%, more optionally in the range of 15wt% to 30wt%, or further optionally in the range of 17wt% to 20wt%; and/or a content of element phosphorus is in the range of 12wt% to 25wt%, optionally in the range of 15wt% to 20wt%, or more optionally in the range of 16.8wt% to 19.5wt%; and/or a weight ratio of element manganese to element phosphorus is in the range of 0.71 to 1.85, more optionally in the range of 0.90 to 1.25, or optionally in the range of 0.95 to 1.20.

In this application, under the condition that only the core of the positive electrode active material contains manganese, the content of manganese may correspond to the content of the core.

In this application, limiting the content of element manganese in the foregoing range can ensure the stability and high density of the positive electrode active material, thus improving the performance of the secondary battery such as cycling, storage, and compacted density; and can maintain a specific voltage plateau height, thus increasing the energy density of the secondary battery.

In this application, limiting the content of element phosphorus in the foregoing range can effectively improve the conductivity of the material and can enhance the overall stability of the material.

Limiting the weight ratio of manganese to phosphorus in the foregoing range can effectively reduce the dissolving-out amount of transition metal manganese, and improve the stability and gram capacity of the positive electrode active material, thereby improving the cycling performance and storage performance of the secondary battery; and helps to reduce the heterophase structure in the material and maintain the discharge voltage plateau height of the material, thereby increasing the energy density of the secondary battery.

The measurement of element manganese and element phosphorus can be performed by means of conventional technologies in the art. In particular, the following method is used to determine the content of element manganese and element phosphorus: dissolving the material in dilute hydrochloric acid (with a concentration of 10% to 30%), measuring the content of each element in the solution using ICP, and then performing measurement and conversion for the content of element manganese to obtain its weight ratio.

In some embodiments, a lattice change rate of the positive electrode active material having a core-shell structure before and after complete deintercalation of lithium is lower than 8.1%, optionally lower than 4%, more optionally lower than 3.8%, or further optionally from 2.0% to 3.8%.

The process of deintercalation of lithium in lithium manganese phosphate (LiMnPO₄) is a two-phase reaction. The interfacial stress of the two phases is determined by the magnitude of the lattice change rate before and after deintercalation of lithium, where a smaller lattice change rate indicates a lower interfacial stress and easier Li⁺ transfer. Therefore, reducing the lattice change rate of the core is beneficial to increase the Li⁺ transport capacity, thereby improving the rate performance of the secondary battery. The positive electrode active material having a core-shell structure of this application can achieve a lattice change rate lower than 8.1% (optionally lower than 4%) before and after deintercalation of lithium, so the use of the positive electrode active material can improve the rate performance of the secondary battery. The lattice change rate can be measured by methods known in the art, for example, X-ray diffraction mapping (XRD).

In some embodiments, a Li/Mn anti-site defect concentration of the positive electrode active material having a core-shell structure is lower than 4%, optionally lower than 2.2%, or more optionally from 1.5% to 2.2%.

The Li/Mn anti-site defects of this application mean the interchange of the Li⁺ and Mn²⁺ sites in the LiMnPO₄ lattice. Accordingly, the Li/Mn anti-site defect concentration refers to a percentage of Li⁺ interchanged with Mn²⁺ in the total amount of Li⁺. In this application, the Li/Mn anti-site defect concentration can be, for example, tested according to JIS K 0131-1996.

The positive electrode active material having a core-shell structure of this application can achieve the aforementioned low Li/Mn anti-site defect concentration. Although the mechanism has not been understood yet, the inventors of this application speculate that because the Li⁺ and Mn²⁺ sites in the LiMnPO₄ lattice are interchanged and the transport passage of Li⁺ is a one-dimensional passage, Mn²⁺ in the passage of Li⁺ is difficult to migrate and thus hinders the transport of Li⁺. Therefore, the positive electrode active material having a core-shell structure of this application can reduce Mn²⁺ hindering the transport of Li⁺ due to the low Li/Mn anti-site defect concentration, which is in the foregoing range, and increase the gram capacity extractability and rate performance of the positive electrode active material.

In some embodiments, a compacted density of the positive electrode active material under 3 tons is greater than 1.98 g/cm³, optionally greater than 2.2 g/cm³, or more optionally greater than 2.2 g/cm³ and less than 2.8 g/cm³. A higher compacted density indicates a large weight of the active material per unit volume. Therefore, increasing the compacted density is conducive to increasing the volumetric energy density of the cell. The compacted density can be measured according to GB/T 24533-2009.

In some embodiments, a surface oxygen valence of the positive electrode active material is lower than -1.90, or optionally from -1.90 to -1.98.

The stable valence of oxygen is originally -2. The valence closer to -2 indicates a stronger electron accepting ability, in other words, higher oxidability. Typically, the surface valence of oxygen is lower than -1.7. In this application, limiting the surface oxygen valence of the positive electrode active material in the foregoing range can mitigate the interfacial side reactions between the positive electrode material and the electrolyte, thereby improving the performance of the cell in terms of cycling, high temperature storage, and the like and suppressing gas production.

The surface oxygen valence can be measured by a method known in the art, such as electron energy loss spectroscopy (EELS).

In some embodiments, m may be any value selected in the range of 0.97 to 1.01.

In some embodiments, y may be any value selected in the range of 0.25 to 0.5.

In some embodiments, a may be any value selected in the range of 1 to 2, for example, 1, or 2.

In some embodiments, b may be, for example, 1, 2, 3, or 4.

In some embodiments, c may be, for example, 1, 2, or 3.

In some embodiments, d may be any value selected in the range of 1 to 2, for example, 1, or 2.

In some embodiments, e may be any value selected in the range of 1 to 5, for example, 1, 2, 3, 4, or 5.

### [Preparation method of positive electrode active material]

This application provides a preparation method of positive electrode active material. The method includes the following steps:
a step of providing a core material: the core material containing LiₘAₓMn_{1-y}B_{y}P_{1-z}C_{z}O₄₋ₙDₙ, where m is selected from any value in the range of 0.9 to 1.1, x is selected from any value in the range of 0.001 to 0.1, y is selected from any value in the range of 0.001 to 0.6, or optionally selected from any value in the range of 0.001 to 0.5, z is selected from any value in the range of 0.001 to 0.1, n is selected from any value in the range of 0.001 to 0.1, A is selected from one or more elements of Zn, Al, Na, K, Mg, Nb, Mo, and W, or optionally selected from one or more elements of Al, Mg, Nb, Mo, and W, B is selected from one or more elements of Ti, V, Zr, Fe, Ni, Mg, Co, Ga, Sn, Sb, Nb, and Ge, or optionally selected from one or more elements of Ti, V, Fe, Ni, Mg, and Co, C is selected from one or more elements of B, S, Si, and N, or optionally selected from one or more elements of S, Si, and N, and D is selected from one or more elements of S, F, Cl, and Br, or optionally selected from one or more elements of F, Cl, and Br; and
a first enveloping step: providing a first mixture containing a pyrophosphate LiₐMP₂O₇ and/or M_{b}(P₂O₇)_{c}, and mixing the core material and the first mixture for drying and sintering to obtain a material enveloped by a first coating layer, where a is greater than 0 and less than or equal to 2, b is any value in the range of 1 to 4, c is any value in the range of 1 to 3, and each M in the pyrophosphates LiₐMP₂O₇ and M_{b}(P₂O₇)_{c} is independently selected from one or more elements of Fe, Ni, Mg, Co, Cu, Zn, Ti, Ag, Zr, Nb, and Al, or optionally selected from one or more elements of Fe, Ni, Mg, Co, Cu, Zn, Ti, Ag, Zr, and Al;
a second enveloping step: providing a second mixture containing an oxide M'_{d}Oₑ, and mixing the material coated by the first coating layer and the second mixture for drying and sintering to obtain a material enveloped by two coating layers, where d is greater than 0 and less than or equal to 2, e is greater than 0 and less than or equal to 5, M' is selected from one or more elements of alkali metals, alkaline earth metals, transition metals, group IIIA elements, group IVA elements, lanthanide elements, and Sb, optionally selected from one or more elements of Li, Be, B, Na, Mg, Al, Si, P, S, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La, and Ce, or more optionally selected from one or more elements of Mg, Al, Ca, Ti, V, Co, Ni, Cu, Zn, and Zr; and
a third enveloping step: providing a third mixture containing a source of carbon, and mixing the material enveloped by the two coating layers and the third mixture for drying and sintering to obtain a positive electrode active material;
where the positive electrode active material has a core-shell structure including the core and a shell enveloping the core, the core containing LiₘAₓMn_{1-y}B_{y}P_{1-z}C_{z}O₄₋ₙDₙ, the shell including the first coating layer enveloping the core, a second coating layer enveloping the first coating layer, and a third coating layer enveloping the second coating layer, the first coating layer containing a crystalline pyrophosphate LiₐMP₂O₇ and/or M_{b}(P₂O₇)_{c}, the second coating layer containing an oxide M'_{d}Oₑ, and the third coating layer containing carbon. A, B, C, D, M, M', m, x, y, z, n, a, b, c, d, and e are defined as previously described.

Based on this, in this application, a new type of positive electrode active material having a core-shell structure is provided by doping elements A, B, C, and D at the Li site, the manganese site, the phosphorus site, and the O site of lithium manganese phosphate to obtain a doped lithium manganese phosphate core and to form three coatings on the core surface, which can greatly reduce the Li/Mn anti-site defects produced, significantly reduce the dissolving-out amount of manganese, decrease the lattice change rate, and increase the compacted density. Applying such material to a secondary battery can increase the capacity of the secondary battery and improve the cycling performance, high-temperature storage performance, and safety performance of the secondary battery.

In some embodiments, the step of providing a core material includes the following steps:
step (1): mixing a source of manganese, a source of element B, an acid, and an optional solvent to obtain a mixture; and
step (2): mixing the mixture with a source of lithium, a source of phosphorus, a source of element A, a source of element C, a source of element D, and an optional solvent for drying and sintering to obtain the core material containing LiₘAₓMn_{1-y}B_{y}P_{1-z}C_{z}O₄₋ₙDₙ.

In some embodiments, in step (1), the mixing is carried out at 60°C to 120°C (for example, about 70°C, about 80°C, about 90°C, about 100°C, about 110°C, or about 120°C); and/or, in step (1), the stirring is carried out at 200 rpm to 800 rpm (for example, 300 rpm, 400 rpm, 500 rpm, 600 rpm, or 700 rpm) for mixing.

In some embodiments, in step (2), the mixing is carried out at 20°C to 120°C, optionally 40°C to 120°C (for example, about 30°C, about 50°C, about 60°C, about 70°C, about 80°C, about 90°C, about 100°C, about 110°C, or about 120°C).

In some embodiments, in step (2), the mixing is carried out for 8 hours to 15 hours (for example, about 8 hours, about 9 hours, about 10 hours, about 11 hours, about 12 hours, about 13 hours, or about 14 hours).

Under the condition that the temperature and time during the preparation of the core particles are in the foregoing ranges, the cores obtained from the preparation and the positive electrode active material made therefrom have fewer lattice defects, which is conducive to suppressing manganese dissolution and reducing interfacial side reactions between the positive electrode active material and the electrolyte, thereby improving the cycling performance and safety performance of the secondary battery.

In some embodiments, in step (2), the mixing is performed at pH 3.5 to pH 6, optionally pH 4 to pH 6, more optionally pH 4 to pH 5. It should be noted that the pH may be adjusted in this application by methods commonly used in the art, for example, by adding an acid or alkali.

In some optional embodiments, the mixture obtained in step (1) is filtered, dried, and sanded to obtain element B-doped manganese salt particles with a particle size of 50 nm to 200 nm, and the element B-doped manganese salt particles are used in step (2) to mix with a source of lithium, a source of phosphorus, a source of element A, a source of element C, a source of element D, or an optional solvent.

In some embodiments, optionally, a molar ratio of the mixture or element B-doped manganese salt particles, the source of lithium, and the source of phosphorus in step (2) is 1:0.4-2.1:0.1-2.1, or optionally about 1:0.4-0.5:0.1-1.

In some embodiments, in step (2), the sintering is carried out at 600°C to 900°C for 6 hours to 14 hours; optionally, the sintering may be carried out at about 650°C, about 700°C, about 750°C, about 800°C, about 850°C, or about 900°C for about 2 hours, about 3 hours, about 4 hours, about 5 hours, about 6 hours, about 7 hours, about 8 hours, about 9 hours, or about 10 hours; optionally, the sintering is carried out under inert gas or a mixture of inert gas and hydrogen; or more optionally, the protective atmosphere is a mixture of 70vol% to 90vol% nitrogen and 10vol% to 30vol% hydrogen; optionally, the sintering temperature and sintering time may be in any range of any of these values, which can increase the crystallinity of the core, reduce the heterophase structures generated, and maintain a specific granularity of the core, thereby increasing the gram capacity and compacted density of the positive electrode active material, and improving the overall performance of the secondary battery, including the rate performance.

In some optional embodiments, in step (2), drying is carried out using spray drying equipment.

In some optional embodiments, in step (2), the mixing is accompanied by grinding.

In some embodiments, in the first enveloping step, a first mixture is obtained by mixing a source of element M, a source of phosphorus, an acid, an optional source of lithium, and an optional solvent; and/or
in the second enveloping step, a second mixture is obtained by mixing a source of element M' and a solvent; and/or
in the third enveloping step, a third mixture is obtained by mixing a source of carbon and a solvent.

In some embodiments, in the first enveloping step, the source of element M, the source of phosphorus, the acid, the optional source of lithium, and the optional solvent are mixed at room temperature for 1h to 5h (for example, about 1.5 hours, about 2 hours, about 3 hours, about 4 hours, about 4.5 hours, or about 5 hours), and then heated to 50°C to 120°C (for example, about 55°C, about 60°C, about 70°C, about 80°C, about 90°C, about 100°C, about 110°C, or about 120°C) and mixed at this temperature for 2h to 10h (for example, about 2 hours, about 3 hours, about 4 hours, about 5 hours, about 6 hours, about 7 hours, about 8 hours, about 9 hours, or about 10 hours), where the mixing is all carried out at pH 3.5 to pH 6.5 (for example, pH 4 to pH 6).

In some embodiments, in the second enveloping step, the source of element M' and the solvent are mixed at room temperature for 1h to 10h (for example, 1.5 hours, about 2 hours, about 3 hours, about 4 hours, about 4.5 hours, about 5 hours, about 6 hours, about 7 hours, about 8 hours, about 9 hours, or about 10 hours), and then heated to 60°C to 150°C (for example, about 65°C, about 70°C, about 80°C, about 90°C, about 100°C, about 110°C, about 120°C, about 130°C, about 140°C, or about 150 °C) and mixed at this temperature for 2h to 10h (for example, about 2 hours, about 3 hours, about 4 hours, about 5 hours, about 6 hours, about 7 hours, about 8 hours, about 9 hours, or about 10 hours).

The source of the material is not particularly limited in the preparation method in this application, and the source of an element may include one or more of elementary substance, sulfate, halide, nitrate, organic acid salt, oxide, and hydroxide of the element, provided that the source can achieve the objectives of the preparation method in this application.

In some embodiments, the source of element A is selected from one or more of monomer, oxide, phosphate, oxalate, carbonate, and sulfate of element A; and/or
the source of element B is selected from one or more of monomer, oxide, phosphate, oxalate, carbonate, and sulfate of element B; and/or
the source of element C is selected from one or more of sulfate, borate, nitrate, and silicate of element C; and/or
the source of element D is selected from one or more of monomer and ammonium salt of element D.

In some embodiments, the source of element M is selected from one or more of monomer, carbonate, sulfate, halide, nitrate, organic acid salt, oxide, and hydroxide of element M.

In some embodiments, the source of element M' is selected from one or more of monomer, carbonate, sulfate, halide, nitrate, organic acid salt, oxide, and hydroxide of element M'.

The amounts of sources of elements A, B, C, D, M, and M' added each depend on a target doping amount, and the ratio of amounts of the source of lithium, the source of manganese, and the source of phosphorus conforms to the stoichiometric ratio.

In this application, the source of manganese may be a manganese-containing substance known in the art that can be used for preparing lithium manganese phosphate. For example, the source of manganese may be one or more selected from elemental manganese, manganese dioxide, manganese phosphate, manganese oxalate, and manganese carbonate.

In this application, the acid may be selected from one or more of organic acids such as hydrochloric acid, sulfuric acid, nitric acid, phosphoric acid, silicic acid, metasilicic acid, and organic acids such as oxalic acid. In some embodiments, the acid is a dilute organic acid with a concentration lower than 60wt%.

In this application, the source of lithium may be a lithium-containing substance known in the art that can be used for preparing lithium manganese phosphate. For example, the source of lithium is selected from one or more of lithium carbonate, lithium hydroxide, lithium phosphate, and lithium dihydrogen phosphate.

In this application, the source of phosphorus may be a phosphorus-containing substance known in the art that can be used for preparing lithium manganese phosphate. For example, the source of phosphorus is selected from one or more of diammonium phosphate, ammonium dihydrogen phosphate, ammonium phosphate, and phosphoric acid.

In this application, for example, the source of carbon is selected from one or more of starch, sucrose, glucose, polyvinyl alcohol, polyethylene glycol, and citric acid.

In some embodiments, in the first enveloping step, the sintering is carried out at 650°C to 800°C (for example, about 650°C, about 700°C, about 750°C, or about 800°C) for 2 hours to 6 hours (about 2 hours, about 3 hours, about 4 hours, about 5 hours, or about 6 hours); and/or
in some embodiments, in the second enveloping step, the sintering is carried out at 500°C to 700°C (for example, about 550°C, about 600°C, or about 700°C) for 6 hours to 10 hours (for example, about 6 hours, about 7 hours, about 8 hours, about 9 hours, or about 10 hours); and/or
in some embodiments, in the third enveloping step, the sintering is carried out at 700°C to 800°C (for example, about 700°C, about 750°C, or about 800°C) for 6 hours to 10 hours (for example, about 6 hours, about 7 hours, about 8 hours, about 9 hours, or about 10 hours).

In the first enveloping step, the second enveloping step, and the third enveloping step described above, the drying is all carried out at 100°C to 200°C, optionally at 110°C to 190°C, more optionally at 120°C to 180°C, further more optionally 120°C to 170°C, or most optionally 120°C to 160°C, with a drying time of 3h to 9h, optionally 4h to 8h, more optionally 5h to 7h, or most optionally about 6h.

### [Positive electrode plate]

This application provides a positive electrode plate including a positive electrode current collector and a positive electrode film layer provided on at least one surface of the positive electrode current collector, where the positive electrode film layer includes the foregoing positive electrode active material or a positive electrode active material prepared by the foregoing preparation method; or optionally, based on a total weight of the positive electrode film layer, a content of the positive electrode active material in the positive electrode film layer is higher than 10wt%.

In some embodiments, the content of the positive electrode active material in the positive electrode film layer is 90wt% to 99.5wt% based on the total weight of the positive electrode film layer. The secondary battery is guaranteed to have a high capacity and better cycling performance, high-temperature storage performance, and safety performance.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (matrices such as polypropylene (PP), polyethylene terephthalate (PET), polybutylene terephthalate (PBT), polystyrene (PS), or polyethylene (PE)).

In some embodiments, the positive electrode film layer may further include other positive electrode active materials for batteries that are well known in the art. For example, the positive electrode active material may include at least one of the following materials: olivine-structured lithium-containing phosphate and respective modified compounds thereof. However, this application is not limited to these materials, and may alternatively use other conventional well-known materials that can be used as positive electrode active materials for batteries. One of these positive electrode active materials may be used alone, or two or more of them may be used in combination. An example of the olivine-structured lithium-containing phosphate may include but is not limited to at least one of lithium iron phosphate (for example, LiFePO₄ (or LFP for short)), composite materials of lithium iron phosphate and carbon, lithium manganese phosphate (for example, LiMnPO₄), composite materials of lithium manganese phosphate and carbon, lithium manganese iron phosphate, and composite materials of lithium manganese iron phosphate and carbon.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofibers.

### [Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (matrices such as polypropylene (PP), polyethylene terephthalate (PET), polybutylene terephthalate (PBT), polystyrene (PS), or polyethylene (PE)).

In some embodiments, the negative electrode active material may be a well-known negative electrode active material used for a battery in the art. For example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compound, silicon-carbon composite, silicon-nitrogen composite, or silicon alloy. The tin-based material may be selected from at least one of elemental tin, tin-oxygen compound, or tin alloy. However, this application is not limited to these materials, and may alternatively use other conventional materials that can be used as negative electrode active materials for batteries. One of these negative electrode active materials may be used alone, or two or more of them may be used in combination.

In some embodiments, the negative electrode film layer further optionally includes a binder. For example, the binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), or carboxymethyl chitosan (CMCS).

In some embodiments, the negative electrode film layer further optionally includes a conductive agent. For example, the conductive agent may be selected from at least one of superconducting carbon, acetylene black, carbon black, Ketjen black, carbon dots, carbon nanotubes, graphene, and carbon nanofibers.

In some embodiments, the negative electrode film layer further optionally includes other additives such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

### [Electrolyte]

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is liquid and includes an electrolytic salt and a solvent.

In some embodiments, the electrolyte salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfonimide, lithium trifluoromethanesulfonat, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the electrolyte further optionally includes an additive. For example, the additive may include a negative electrode film-forming additive and a positive electrode film-forming additive, or may include an additive that can improve some performance of the battery, for example, an additive for improving over-charge performance of the battery and an additive for improving high-temperature performance or low-temperature performance of the battery.

### [Separator]

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic, which, for example, may be polypropylene, polybutylene terephthalate, and polybutylene succinate.

This application does not impose any special limitations on a shape of the secondary battery, and the secondary battery may be cylindrical, rectangular, or of any other shapes. For example, FIG. 2 shows a secondary battery 5 of a rectangular structure as an example.

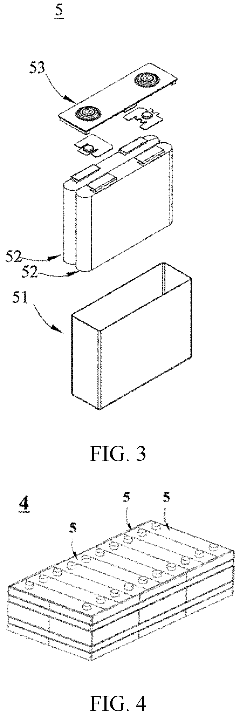

In some embodiments, referring to FIG. 3, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to seal the accommodating cavity. The positive electrode plate, the negative electrode plate, and the separator may be made into an electrode assembly 52 through winding or lamination. The electrode assembly 52 is enclosed in the accommodating cavity. The electrolyte infiltrates into the electrode assembly 52. The secondary battery 5 may include one or more electrode assemblies 52, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

FIG. 4 shows a battery module 4 as an example. Refer to FIG. 4. In the battery module 4, a plurality of secondary batteries 5 may be sequentially arranged in a length direction of the battery module 4. Certainly, the batteries may alternatively be arranged in any other manners. Further, the plurality of secondary batteries 5 may be fastened by using fasteners.

Optionally, the battery module 4 may further include a housing with accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

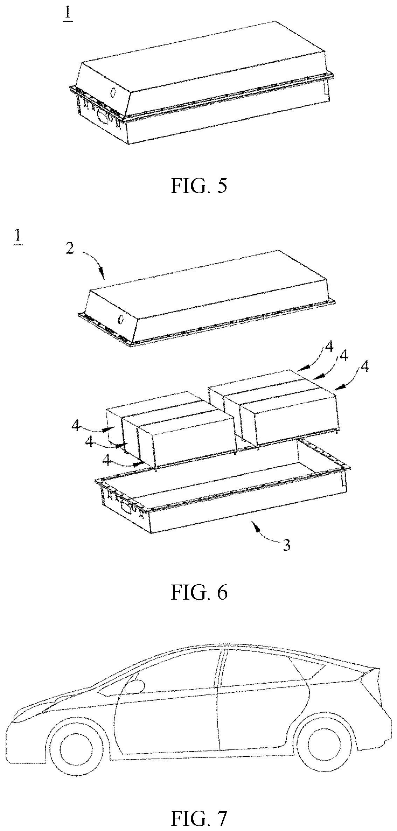

FIG. 5 and FIG. 6 show a battery pack 1 as an example. Refer to FIG. 5 and FIG. 6. The battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 7 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

### [Examples]

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

The raw materials used in the embodiments of this application are sourced as follows:

| Name | Chemical formula | Manufacturer | Specification |
|---|---|---|---|
| Manganese carbonate | MnCO₃ | Shandong Xiya Reagent Co., Ltd. | 1 Kg |
| Lithium carbonate | Li₂CO₃ | Shandong Xiya Reagent Co., Ltd. | 1 Kg |
| Magnesium carbonate | MgCO₃ | Shandong Xiya Reagent Co., Ltd. | 1 Kg |
| Zinc carbonate | ZnCO₃ | Wuhan Xinru Chemical Co., Ltd. | 25 Kg |
| Ferrous carbonate | FeCO₃ | Xi'an Lanzhiguang Fine Material Co., Ltd. | 1 Kg |
| Nickel sulfate | NiCO₃ | Shandong Xiya Reagent Co., Ltd. | 1 Kg |
| Titanium sulfate | Ti(SO₄)₂ | Shandong Xiya Reagent Co., Ltd. | 1 Kg |
| Cobalt sulfate | CoSO₄ | Xiamen Simagchem Co., Ltd. | 500 g |
| Vanadium dichloride | VCl₂ | Shanghai Jinjinle Industry Co., Ltd. | 1 Kg |
| Oxalic acid dihydrate | C₂H₂O₄·2(H₂O) | Shanghai Jinjinle Industry Co., Ltd. | 1 Kg |
| Ammonium dihydrogen phosphate | NH₄H₂PO₄ | Shanghai Chengshao Biotechnology Co., Ltd. | 500 g |
| Sucrose | C₁₂H₂₂O₁₁ | Shanghai Yuanye Biotechnology Co., Ltd. | 100 g |
| Dilute sulfuric acid | H₂SO₄ | Shenzhen Haisian Biotechnology Co., Ltd. | Mass fraction 60% |
| Dilute nitric acid | HNO₃ | Anhui Lingtian Fine Chemical Co., Ltd. | Mass fraction 60% |
| Metasilicic acid | H₂SiO₃ | Shanghai Yuanye Biotechnology Co., Ltd. | 100 g, mass fraction: 99.8% |
| Aluminum trioxide | Al₂O₃ | Hebei Guanlang Biotechnology Co., Ltd. | 25 Kg |
| Magnesium oxide | MgO | Hebei Guanlang Biotechnology Co., Ltd. | 25 Kg |
| Zirconium dioxide | ZrO₂ | Qingxuan Shengyi Biotechnology Co., Ltd. | 1 Kg |
| Copper oxide | CuO | Hebei Guanlang Biotechnology Co., Ltd. | 25 Kg |
| Silicon Dioxide | SiO₂ | Hebei Guanlang Biotechnology Co., Ltd. | 25 Kg |
| Tungsten trioxide | WO₃ | Hebei Guanlang Biotechnology Co., Ltd. | 25 Kg |
| Titanium dioxide | TiO₂ | Shanghai Yuanye Biotechnology Co., Ltd. | 500 g |
| Vanadium pentoxide | V₂O₅ | Shanghai Jinjinle Industry Co., Ltd. | 1 Kg |
| Nickel oxide | NiO | Hubei Wande Chemical Co., Ltd. | 25 Kg |

### Preparation of positive electrode active material and its slurry

### Example 1

### Step S1: Preparation of doped manganese oxalate

1.3 mol MnSO₄·H₂O and 0.7 mol FeSO₄·H₂O were mixed thoroughly in a mixer for 6 hours; the resulting mixture was transferred to a reactor, in which 10 L of deionized water and 2 mol of oxalic acid dihydrate were added; this mixture was heated to 80°C and then stirred at 600 rpm for 6h; the reaction was terminated (no bubbles were generated) to obtain a Fe-doped manganese oxalate suspension; and the suspension was filtered, and the filter cake was dried at 120°C and ground to obtain Fe-doped manganese oxalate particles with a particle size Dv₅₀ of about 100 nm.

### Step S2: Preparation of core containing Li_{0.994}Mo_{0.001}Mn_{0.65}Fe_{0.35}P_{0.999}Si_{0.001}O_{3.999}F_{0.001}

1 mol of Fe-doped manganese oxalate particles, 0.497 mol of lithium carbonate, 0.001 mol of Mo(SO₄)₃, an aqueous phosphoric acid solution containing 0.999 mol of phosphoric acid at a concentration of 85%, 0.001 mol of H₄SiO₄, 0.0005 mol of NH₄HF₂, and 0.005 mol of sucrose were added to 20 L of deionized water, and the resulting mixture was transferred to a sand mill and fully ground and stirred for 10 hours to obtain a slurry; the slurry was transferred to the spray drying equipment for spray drying granulation, with a drying temperature at 250°C and a drying time of 4h, to obtain the particles; and the particles were sintered at 700°C for 10 hours in a protective atmosphere of nitrogen (90% v/v) + hydrogen (10% v/v), to obtain a core material. The element content of the core material was examined by inductively coupled plasma emission spectrometry (ICP) to obtain a core with the chemical formula as shown above.

### Step S3: Preparation of first coating layer suspension

Preparation of Li₂FeP₂O₇ solution: 7.4 g of lithium carbonate, 11.6 g of ferrous carbonate, 23.0 g of ammonium dihydrogen phosphate, and 12.6 g of oxalic acid dihydrate were dissolved in 500 mL of deionized water, during which a pH value was controlled to be 5; the mixture was stirred and reacted at room temperature for 2h to obtain a solution; and then the solution was heated to 80°C and left standing at this temperature for 4h to obtain a first coating layer suspension.

### Step S4: Application of first coating layer

157.2 g of doped lithium manganese phosphate core material obtained in step S2 was added to the first coating layer suspension (having a coating substance of 1.572 g) obtained in step S3, and the mixture was fully mixed and stirred for 6h. After well mixing, the mixture was transferred to an oven for drying at 120°C for 6h, and then sintered at 650°C for 6h to obtain a pyrophosphate-enveloped material.

### Step S5: Preparation of second coating layer suspension

4.71 g of nanoscale Al₂O₃ (particle size of about 20 nm) was dissolved in 1500 mL of deionized water, and the mixture was stirred for 2h to obtain a second coating layer suspension.

### Step S6: Application of second coating layer

158.772 g of pyrophosphate-enveloped material obtained in step S4 was added to the second coating layer suspension (having a coating substance of 4.71 g) obtained in step S5, and the mixture was fully mixed and stirred for 6h. After well mixing, the mixture was transferred to an oven for drying at 120°C for 6h, and then sintered at 700°C for 8h to obtain a two-layer-enveloped material.

### Step S7: Preparation of third coating layer aqueous solution

37.3 g of sucrose was dissolved in 500 g of deionized water, and then the mixture was stirred and fully dissolved to obtain an aqueous sucrose solution.

### Step S8: Application of third coating layer

1633.9 g of the two-layer-enveloped material obtained in step S6 was added into the sucrose solution obtained in step S7, the mixture was stirred and mixed for 6h. After well mixing, the mixture was transferred to an oven for drying at 150°C for 6h, and then sintered at 700°C for 10h to obtain a three-layer-enveloped material.

### Examples 2 to 89 and Comparative Examples 1 to 12

The positive electrode active materials of Examples 2 to 89 and Comparative Examples 1 to 12 were made in a method similar to that of Example 1, and the differences in the preparation of the positive electrode active materials are shown in Tables 1 to 6.

The positive electrode active materials of Comparative Examples 1 to 9, and 11 were not enveloped by the first layer, so there were no steps S3 and S4; and the positive electrode active materials of Comparative Examples 1 to 10 were not enveloped by the second layer, so there were no steps S5 and S6.

**Table 1: Preparation of doped manganese oxalate and preparation of core (steps S1 and S2)**

| No. | Chemical formula of core* | Raw materials used in step S1 | Raw materials used in step S2 |
|---|---|---|---|
| Comparative Example 1 | LiMnPO₄ | MnSO₄·H₂O, 1.0 mol; water, 10 L; oxalic acid dihydrate, 1 mol; | Manganese oxalate particles obtained in step S1, 1 mol; lithium carbonate, 0.5 mol; aqueous phosphoric acid solution at a concentration of 85%, containing 1 mol of phosphoric acid; sucrose, 0.005 mol; water, 20 L; |
| Comparative Example 2 | LiMn_{0.85}Fe_{0.15}PO₄ | MnSO₄·H₂O, 0.85 mol; FeSO₄· H₂O, 0.15 mol; water, 10 L; oxalic acid dihydrate, 1 mol; | Doped manganese oxalate particles obtained in step S1, 1 mol; lithium carbonate, 0.5 mol; aqueous phosphoric acid solution at a concentration of 85%, containing 1 mol of phosphoric acid; sucrose, 0.005 mol; water, 20 L; |
| Comparative Example 3 | Li_{0.990}Mg_{0.005}Mn_{0.95}Zn_{0.05}PO₄ | MnSO₄·H₂O, 1.9 mol; ZnSO₄, 0.1 mol; water, 10 L; oxalic acid dihydrate, 2 mol; | Doped manganese oxalate particles obtained in step S1, 1 mol; lithium carbonate, 0.495 mol; MgSO₄₃, 0.005 mol, aqueous phosphoric acid solution at a concentration of 85%, containing 1 mol of phosphoric acid; sucrose, 0.005 mol; water, 20 L; |
| Comparative Example 4 | Li_{0.90}Nb_{0.01}Mn_{0.6}Fe_{0.4}PO_{3.95}F_{0.05} | MnSO₄·H₂O, 1.2 mol; FeSO₄·H₂O, 0.8 mol; water, 10 L; oxalic acid dihydrate, 2 mol; | Fe-doped manganese oxalate particles obtained in step S1, 1 mol; lithium carbonate, 0.45 mol; Nb₂(SO₄)₅, 0.005 mol, aqueous phosphoric acid solution at a concentration of 85%, containing 1 mol of phosphoric acid; NH₄HF₂, 0.025 mol; sucrose, 0.005 mol; water, 20 L; |
| Comparative Example 5 | Li_{0.76}Mg_{0.12}Mn_{0.7}Fe_{0.3}P_{0.999}Si_{0.001}O_{3. 999}F_{0.001} | MnSO₄·H₂O, 1.4 mol; FeSO₄·H₂O, 0.6 mol; water, 10 L; oxalic acid dihydrate, 2 mol; | Fe-doped manganese oxalate particles obtained in step S1, 1 mol; lithium carbonate, 0.38 mol; MgSO₄, 0.12 mol, aqueous phosphoric acid solution at a concentration of 85%, containing 0.999 mol of phosphoric acid; H₄SiO₄, 0.001 mol; NH₄HF₂, 0.0005 mol; sucrose, 0.005 mol; water, 20 L; |
| Comparative Example 6 | Li_{0.998}Mg_{0.001}Mn_{0.4}Zn_{0.6}P_{0.999}Si_{0.001} O_{3.999}F_{0.001} | MnSO₄·H₂O, 0.8 mol; ZnSO₄, 1.2 mol; water, 10 L; oxalic acid dihydrate, 2 mol; | Doped manganese oxalate particles obtained in step S1, 1 mol; lithium carbonate, 0.499 mol; MgSO₄, 0.001 mol, aqueous phosphoric acid solution at a concentration of 85%, containing 0.999 mol of phosphoric acid; H₄SiO₄, 0.001 mol; NH₄HF₂, 0.0005 mol; sucrose, 0.005 mol; water, 20 L; |
| Comparative Example 7 | Li_{1.068}Mg_{0.001}Mn_{0.7}Fe_{0.3}P_{0.88}Si_{0.12}O₃. ₉₅F_{0.05} | MnSO₄·H₂O, 1.4 mol; FeSO₄·H₂O, 0.6 mol; water, 10 L; oxalic acid dihydrate, 2 mol; | Fe-doped manganese oxalate particles obtained in step S1, 1 mol; lithium carbonate, 0.534 mol; MgSO₄, 0.001 mol, aqueous phosphoric acid solution at a concentration of 85%, containing 0.88 mol of phosphoric acid; H₄SiO₄, 0.12 mol; NH₄HF₂, 0.025 mol; sucrose, 0.005 mol; water, 20 L; |
| Comparative Example 8 | Li_{0.948}Mg_{0.001}Mn_{0.6}Fe_{0.4}P_{0.93}Si_{0.07}O₃. ₈₈F_{0.12} | MnSO₄·H₂O, 1.2 mol; FeSO₄·H₂O, 0.8 mol; water, 10 L; oxalic acid dihydrate, 2 mol; | Fe-doped manganese oxalate particles obtained in step S1, 1 mol; lithium carbonate, 0.474 mol; MgSO₄, 0.001 mol, aqueous phosphoric acid solution at a concentration of 85%, containing 0.93 mol of phosphoric acid; H₄SiO₄, 0.07 mol; NH₄HF₂, 0.06 mol; sucrose, 0.005 mol; water, 20 L; |
| Comparative Examples 9 to 12, Example 1, Examples 12 to 28, Examples 45 to 62, Examples 67 to 72, and Examples 84 to 89 | Li_{0.994}Mo_{0.001}Mn_{0.65}Fe_{0.35}P_{0.999}Si_{0.001} O_{3.999}F_{0.001} | MnSO₄·H₂O, 1.3 mol; FeSO₄·H₂O, 0.7 mol; water, 10 L; oxalic acid dihydrate, 2 mol; | Fe-doped manganese oxalate particles obtained in step S1, 1 mol; lithium carbonate, 0.497 mol; Mo(SO₄)₃, 0.001 mol, aqueous phosphoric acid solution at a concentration of 85%, containing 0.999 mol of phosphoric acid; H₄SiO₄, 0.001 mol; NH₄HF₂, 0.0005 mol; sucrose, 0.005 mol; water, 20 L; |
| Example 2 | Li_{0.977}Mg_{0.001}Mn_{0.65}Fe_{0.34}Ti_{0.01}P_{0.999} N_{0.001}O_{3.999}F_{0.001} | MnSO₄·H₂O, 1.3 mol; FeSO₄·H₂O, 0.68 mol; water, 10 L; oxalic acid dihydrate, 2 mol; Ti(SO₄)₂, 0.02 mol; | Doped manganese oxalate particles obtained in step S1, 1 mol; lithium carbonate, 0.4885 mol; MgSO₄, 0.001 mol, aqueous phosphoric acid solution at a concentration of 85%, containing 0.999 mol of phosphoric acid; HNO₃, 0.001 mol; NH₄HF₂, 0.0005 mol; sucrose, 0.005 mol; water, 20 L; |
| Example 3 | Li_{0.992}W_{0.001}Mn_{0.65}Fe_{0.35}P_{0.999}S_{0.001}O _{3.999}F_{0.001} | MnSO₄·H₂O, 1.3 mol; FeSO₄·H₂O, 0.7 mol; water, 10 L; oxalic acid dihydrate, 2 mol; | Fe-doped manganese oxalate particles obtained in step S 1, 1 mol; lithium carbonate, 0.496 mol; W(SO₄)₃, 0.001 mol, aqueous phosphoric acid solution at a concentration of 85%, containing 0.999 mol of phosphoric acid; H₂SO₄, 0.001 mol; NH₄HF₂, 0.0005 mol; sucrose, 0.005 mol; water, 20 L; |
| Example 4 | Li_{0.997}Al_{0.001}Mn_{0.65}Fe_{0.35}P_{0.999}Si_{0.001} O_{3.999}Cl_{0.001} | MnSO₄·H₂O, 1.3 mol; FeSO₄·H₂O, 0.7 mol; water, 10 L; oxalic acid dihydrate, 2 mol; | Fe-doped manganese oxalate particles obtained in step S1, 1 mol; lithium carbonate, 0.4985 mol; AL(SO₄)₃, 0.0005 mol, aqueous phosphoric acid solution at a concentration of 85%, containing 0.999 mol of phosphoric acid; H₄SiO₄, 0.001 mol; NNH₄HCl₂, 0.0005 mol; sucrose, 0.005 mol; water, 20 L; |
| Example 5 | Li_{0.993}Nb₀.₀₀₁Mn_{0.65}Fe_{0.345}V_{0.005}P_{0.999} S_{0.001}O_{3.999}F_{0.001} | MnSO₄·H₂O, 1.3 mol; FeSO₄·H₂O, 0.69 mol; water, 10 L; oxalic acid dihydrate, 2 mol; VCl₂, 0.01 mol; | Doped manganese oxalate particles obtained in step S1, 1 mol; lithium carbonate, 0.4965 mol; Nb₂(SO₄)₅, 0.0005 mol, aqueous phosphoric acid solution at a concentration of 85%, containing 0.999 mol of phosphoric acid; H₂SO₄, 0.001 mol; NH₄HF₂, 0.0005 mol; sucrose, 0.005 mol; water, 20 L; |
| Example 6 | Li_{0.993}Nb_{0.001}Mn_{0.65}Fe_{0.34}V_{0.005}Mg_{0.0 05}P_{0.999}S_{0.001}O_{3.999}F_{0.001} | MnSO₄·H₂O, 1.3 mol; FeSO₄·H₂O, 0.68 mol; water, 10 L; oxalic acid dihydrate, 2 mol; VCl₂, 0.01 mol; MgSO₄, 0.01 mol; | Doped manganese oxalate particles obtained in step S1, 1 mol; lithium carbonate, 0.4965 mol; Nb₂(SO₄)₅, 0.0005 mol, aqueous phosphoric acid solution at a concentration of 85%, containing 0.999 mol of phosphoric acid; H₂SO₄, 0.001 mol; NH₄HF₂, 0.0005 mol; sucrose, 0.005 mol; water, 20 L; |
| Example 7 | Li_{0.993}Nb_{0.001}Mn_{0.65}Fe_{0.34}V_{0.005}Co_{0.00 5}P_{0.999}S_{0.001}O_{3.999}F_{0.001} | MnSO₄·H₂O, 1.3 mol; FeSO₄·H₂O, 0.68 mol; water, 10 L; oxalic acid dihydrate, 2 mol; VCl₂, 0.01 mol; CoSO₄, 0.01 mol; | Doped manganese oxalate particles obtained in step S1, 1 mol; lithium carbonate, 0.4965 mol; Nb₂(SO₄)₅, 0.0005 mol, aqueous phosphoric acid solution at a concentration of 85%, containing 0.999 mol of phosphoric acid; H₂SO₄, 0.001 mol; NH₄HF₂, 0.0005 mol; sucrose, 0.005 mol; water, 20 L; |
| Example 8 | Li_{0.993}Nb_{0.001}Mn_{0.65}Fe_{0.34}V_{0.005}Ni_{0.00 5}P_{0.999}S_{0.001}O_{3.999}F_{0.001} | MnSO₄·H₂O, 1.3 mol; FeSO₄·H₂O, 0.68 mol; water, 10 L; oxalic acid dihydrate, 2 mol; VCl₂, 0.01 mol; NiSO₄, 0.01 mol; | Doped manganese oxalate particles obtained in step S1, 1 mol; lithium carbonate, 0.4965 mol; Nb₂(SO₄)₅, 0.0005 mol, aqueous phosphoric acid solution at a concentration of 85%, containing 0.999 mol of phosphoric acid; H₂SO₄, 0.001 mol; NH₄HF₂, 0.0005 mol; sucrose, 0.005 mol; water, 20 L; |
| Example 9 | Li_{0.991}Nb_{0.001}Mn_{0.65}Fe_{0.349}Ti_{0.001}P_{0.99 9}S_{0.001}O_{3.999}Cl_{0.001} | MnSO₄·H₂O, 1.3 mol; FeSO₄·H₂O, 0.698 mol; water, 10 L; oxalic acid dihydrate, 2 mol; Ti(SO₄)₂, 0.002 mol; | Doped manganese oxalate particles obtained in step S1, 1 mol; lithium carbonate, 0.4955 mol; Nb₂(SO₄)₅, 0.0005 mol, aqueous phosphoric acid solution at a concentration of 85%, containing 0.999 mol of phosphoric acid; H₂SO₄, 0.001 mol; NNH₄HCl₂, 0.0005 mol; sucrose, 0.005 mol; water, 20 L; |
| Example 10 | Li_{0.995}Nb_{0.0001}Mn_{0.65}Fe_{0.34}V_{0.0005}Mg_{0.0 05}P_{0.999}Si_{0.001}O_{3.999}Br_{0.001} | MnSO₄·H₂O, 1.3 mol; FeSO₄·H₂O, 0.68 mol; water, 10 L; oxalic acid dihydrate, 2 mol; VCl₂, 0.01 mol; MgSO₄, 0.01 mol; | Doped manganese oxalate particles obtained in step S1, 1 mol; lithium carbonate, 0.4975 mol; Nb₂(SO₄)₅, 0.0005 mol, aqueous phosphoric acid solution at a concentration of 85%, containing 0.999 mol of phosphoric acid; H₄SiO₄, 0.001 mol; NH₄HBr₂, 0.0005 mol; sucrose, 0.005 mol; water, 20 L; |
| Example 11 | Li_{0.998}Mg_{0.001}Mn_{0.65}Fe_{0.345}V_{0.005}P_{0.99 9}Si_{0.001}O_{3.999}Br_{0.001} | MnSO₄·H₂O, 1.3 mol; FeSO₄·H₂O, 0.69 mol; water, 10 L; oxalic acid dihydrate, 2 mol; VCl₂, 0.01 mol; | Doped manganese oxalate particles obtained in step S1, 1 mol; lithium carbonate, 0.499 mol; MgSO₄, 0.001 mol, aqueous phosphoric acid solution at a concentration of 85%, containing 0.999 mol of phosphoric acid; H₄SiO₄, 0.001 mol; NH₄HBr₂, 0.0005 mol; sucrose, 0.005 mol; water, 20 L; |
| Example 29 | Li_{0.997}Mg_{0.001}Mn_{0.68}Fe_{0.3}V_{0.02}P_{0.999}N _{0.001}O_{3.999}F_{0.001} | MnSO₄·H₂O, 1.36 mol; FeSO₄·H₂O, 0.6 mol; water, 10 L; oxalic acid dihydrate, 2 mol; VCl₂, 0.04 mol; | Doped manganese oxalate particles obtained in step S1, 1 mol; lithium carbonate, 0.4985 mol; MgSO₄, 0.001 mol, aqueous phosphoric acid solution at a concentration of 85%, containing 0.999 mol of phosphoric acid; HNO₃, 0.001 mol; NH₄HF₂, 0.0005 mol; sucrose, 0.005 mol; water, 20 L; |
| Example 30 | Li_{0.997}Mg_{0.001}Mn_{0.58}Fe_{0.4}V_{0.02}P_{0.999}N _{0.001}O_{3.999}F_{0.001} | MnSO₄·H₂O, 1.16 mol; FeSO₄·H₂O, 0.8 mol; water, 10 L; oxalic acid dihydrate, 2 mol; VCl₂, 0.04 mol; | Doped manganese oxalate particles obtained in step S1, 1 mol; lithium carbonate, 0.4985 mol; MgSO₄, 0.001 mol, aqueous phosphoric acid solution at a concentration of 85%, containing 0.999 mol of phosphoric acid; HNO₃, 0.001 mol; NH₄HF₂, 0.0005 mol; sucrose, 0.005 mol; water, 20 L; |
| Example 31 | Li_{0.997}Mg_{0.001}Mn_{0.65}Fe_{0.3}V_{0.05}P_{0.999}N _{0.001}O_{3.999}F_{0.001} | MnSO₄·H₂O, 1.3 mol; FeSO₄·H₂O, 0.6 mol; water, 10 L; oxalic acid dihydrate, 2 mol; VCl₂, 0.1 mol; | Doped manganese oxalate particles obtained in step S1, 1 mol; lithium carbonate, 0.4985 mol; MgSO₄, 0.001 mol, aqueous phosphoric acid solution at a concentration of 85%, containing 0.999 mol of phosphoric acid; HNO₃, 0.001 mol; NH₄HF₂, 0.0005 mol; sucrose, 0.005 mol; water, 20 L; |
| Example 32 | Li_{0.988}Mg_{0.005}Mn_{0.6}Fe_{0.35}V_{0.05}P_{0.999}S_{0 .001}O_{3.999}F_{0.001} | MnSO₄·H₂O, 1.2 mol; FeSO₄·H₂O, 0.7 mol; water, 10 L; oxalic acid dihydrate, 2 mol; VCl₂, 0.1 mol; | Doped manganese oxalate particles obtained in step S1, 1 mol; lithium carbonate, 0.494 mol; MgSO₄, 0.005 mol, aqueous phosphoric acid solution at a concentration of 85%, containing 0.999 mol of phosphoric acid; H₂SO₄, 0.001 mol; NH₄HF₂, 0.0005 mol; sucrose, 0.005 mol; water, 20 L; |
| Example 33 | Li_{0.984}Mg_{0.005}Mn_{0.6}Fe_{0.35}V_{0.05}P_{0.995}S_{0 .005}O_{3.999}F_{0.001} | MnSO₄·H₂O, 1.2 mol; FeSO₄·H₂O, 0.7 mol; water, 10 L; oxalic acid dihydrate, 2 mol; VCl₂, 0.1 mol; | Doped manganese oxalate particles obtained in step S1, 1 mol; lithium carbonate, 0.467 mol; MgSO₄, 0.005 mol, aqueous phosphoric acid solution at a concentration of 85%, containing 0.171 mol of phosphoric acid; H₂SO₄, 0.005 mol; NH₄HF₂, 0.0005 mol; sucrose, 0.005 mol; water, 20 L; |
| Example 34 | Li_{0.984}Mg_{0.005}Mn_{0.6}Fe_{0.35}V_{0.05}P_{0.999}S_{0 .001}O_{3.995}F_{0.005} | MnSO₄·H₂O, 1.2 mol; FeSO₄·H₂O, 0.7 mol; water, 10 L; oxalic acid dihydrate, 2 mol; VCl₂, 0.1 mol; | Doped manganese oxalate particles obtained in step S1, 1 mol; lithium carbonate, 0.492 mol; MgSO₄, 0.005 mol, aqueous phosphoric acid solution at a concentration of 85%, containing 0.999 mol of phosphoric acid; H₂SO₄, 0.001 mol; NH₄HF₂, 0.0025 mol; sucrose, 0.005 mol; water, 20 L; |
| Example 35 | Li_{0.984}Mg_{0.005}Mn_{0.65}Fe_{0.25}V_{0.05}Co_{0.05} P_{0.999}S_{0.001}O_{3.995}F_{0.005} | MnSO₄·H₂O, 1.3 mol; FeSO₄·H₂O, 0.5 mol; water, 10 L; oxalic acid dihydrate, 2 mol; VCl₂, 0.1 mol; CoSO₄, 0.1 mol; | Doped manganese oxalate particles obtained in step S1, 1 mol; lithium carbonate, 0.492 mol; MgSO₄, 0.005 mol, aqueous phosphoric acid solution at a concentration of 85%, containing 0.999 mol of phosphoric acid; H₂SO₄, 0.001 mol; NH₄HF₂, 0.0025 mol; sucrose, 0.005 mol; water, 20 L; |
| Example 36 | Li_{0.984}Mg_{0.005}Mn_{0.65}Fe_{0.20}V_{0.05}Co_{0.10} P_{0.999}S_{0.001}O_{3.995}F_{0.005} | MnSO₄·H₂O, 1.3 mol; FeSO₄·H₂O, 0.4 mol; water, 10 L; oxalic acid dihydrate, 2 mol; VCl₂, 0.1 mol; CoSO₄, 0.2 mol; | Doped manganese oxalate particles obtained in step S1, 1 mol; lithium carbonate, 0.492 mol; MgSO₄, 0.005 mol, aqueous phosphoric acid solution at a concentration of 85%, containing 0.999 mol of phosphoric acid; H₂SO₄, 0.001 mol; NH₄HF₂, 0.0025 mol; sucrose, 0.005 mol; water, 20 L; |
| Example 37 | Li_{0.984}Mg_{0.005}Mn_{0.75}Fe_{0.05}V_{0.05}Co_{0.15} P_{0.999}S_{0.001}O_{3.995}F_{0.005} | MnSO₄·H₂O, 1.5 mol; FeSO₄·H₂O, 0.1 mol; water, 10 L; oxalic acid dihydrate, 2 mol; VCl₂, 0.1 mol; CoSO₄, 0.3 mol; | Doped manganese oxalate particles obtained in step S1, 1 mol; lithium carbonate, 0.492 mol; MgSO₄, 0.005 mol, aqueous phosphoric acid solution at a concentration of 85%, containing 0.999 mol of phosphoric acid; H₂SO₄, 0.001 mol; NH₄HF₂, 0.0025 mol; sucrose, 0.005 mol; water, 20 L; |
| Example 38 | Li_{0.984}Mg_{0.005}Mn_{0.65}Fe_{0.25}V_{0.05}Ni_{0.05} P_{0.999}S_{0.001}O_{3.995}F_{0.005} | MnSO₄·H₂O, 1.3 mol; FeSO₄·H₂O, 0.5 mol; water, 10 L; oxalic acid dihydrate, 2 mol; VCl₂, 0.1 mol; NiSO₄, 0.1 mol; | Doped manganese oxalate particles obtained in step S1, 1 mol; lithium carbonate, 0.492 mol; MgSO₄, 0.005 mol, aqueous phosphoric acid solution at a concentration of 85%, containing 0.999 mol of phosphoric acid; H₂SO₄, 0.001 mol; NH₄HF₂, 0.0025 mol; sucrose, 0.005 mol; water, 20 L; |
| Example 39 | Li_{0.984}Mg_{0.005}Mn_{0.75}Fe_{0.10}V_{0.05}Ni_{0.10} P_{0.999}S_{0.001}O_{3.995}F_{0.005} | MnSO₄·H₂O, 1.5 mol; FeSO₄·H₂O, 0.2 mol; water, 10 L; oxalic acid dihydrate, 2 mol; VCl₂, 0.1 mol; NiSO₄, 0.2 mol; | Doped manganese oxalate particles obtained in step S1, 1 mol; lithium carbonate, 0.492 mol; MgSO₄, 0.005 mol, aqueous phosphoric acid solution at a concentration of 85%, containing 0.999 mol of phosphoric acid; H₂SO₄, 0.001 mol; NH₄HF₂, 0.0025 mol; sucrose, 0.005 mol; water, 20 L; |
| Example 40 | Li_{0.984}Mg_{0.005}Mn_{0.7}Fe_{0.15}V_{0.05}CO_{0.10}P _{0.999}S_{0.001}O_{3.995}F_{0.005} | MnSO₄·H₂O, 1.4 mol; FeSO₄·H₂O, 0.3 mol; water, 10 L; oxalic acid dihydrate, 2 mol; VCl₂, 0.1 mol; CoSO₄, 0.2 mol; | Doped manganese oxalate particles obtained in step S1, 1 mol; lithium carbonate, 0.492 mol; MgSO₄, 0.005 mol, aqueous phosphoric acid solution at a concentration of 85%, containing 0.999 mol of phosphoric acid; H₂SO₄, 0.001 mol; NH₄HF₂, 0.0025 mol; sucrose, 0.005 mol; water, 20 L; |
| Example 41 | Li_{0.984}Mg_{0.005}Mn_{0.6}Fe_{0.25}V_{0.05}CO_{0.10}P _{0.999}S_{0.001}O_{3.995}F_{0.005} | MnSO₄·H₂O, 1.2 mol; FeSO₄·H₂O, 0.5 mol; water, 10 L; oxalic acid dihydrate, 2 mol; VCl₂, 0.1 mol; CoSO₄, 0.2 mol; | Doped manganese oxalate particles obtained in step S1, 1 mol; lithium carbonate, 0.497 mol; MgSO₄, 0.005 mol, aqueous phosphoric acid solution at a concentration of 85%, containing 0.999 mol of phosphoric acid; H₂SO₄, 0.001 mol; NH₄HF₂, 0.0025 mol; sucrose, 0.005 mol; water, 20 L; |
| Example 42 | Li_{0.984}Mg_{0.005}Mn_{0.5}Fe_{0.35}V_{0.05}Co_{0.10}P _{0.999}S_{0.001}O_{3.995}F_{0.005} | MnSO₄·H₂O, 1.0 mol; FeSO₄·H₂O, 0.7 mol; water, 10 L; oxalic acid dihydrate, 2 mol; VCl₂, 0.1 mol; CoSO₄, 0.2 mol; | Doped manganese oxalate particles obtained in step S1, 1 mol; lithium carbonate, 0.492 mol; MgSO₄, 0.005 mol, aqueous phosphoric acid solution at a concentration of 85%, containing 0.999 mol of phosphoric acid; H₂SO₄, 0.001 mol; NH₄HF₂, 0.0025 mol; sucrose, 0.005 mol; water, 20 L; |
| Example 43 | Li_{1.01}Mg_{0.005}Mn_{0.7}Fe_{0.15}V_{0.05}Co_{0.10}P_{0 .9}Si_{0.1}O_{3.92}F_{0.08} | MnSO₄·H₂O, 1.4 mol; FeSO₄·H₂O, 0.3 mol; water, 10 L; oxalic acid dihydrate, 2 mol; VCl₂, 0.1 mol; CoSO₄, 0.2 mol; | Doped manganese oxalate particles obtained in step S1, 1 mol; lithium carbonate, 0.4825 mol; MgSO₄, 0.005 mol, aqueous phosphoric acid solution at a concentration of 85%, containing 0.9 mol of phosphoric acid; H₄SiO₄, 0.1 mol; NH₄HF₂, 0.04 mol; sucrose, 0.005 mol; water, 20 L; |
| Example 44 | Li_{0.97}Mg_{0.005}Mn_{0.7}Fe_{0.15}V_{0.05}Co_{0.10}P_{0 .92}Si_{0.08}O_{3.9}F_{0.1} | MnSO₄·H₂O, 1.4 mol; FeSO₄·H₂O, 0.3 mol; water, 10 L; oxalic acid dihydrate, 2 mol; VCl₂, 0.1 mol; CoSO₄, 0.2 mol; | Doped manganese oxalate particles obtained in step S1, 1 mol; lithium carbonate, 0.485 mol; MgSO₄, 0.005 mol, aqueous phosphoric acid solution at a concentration of 85%, containing 0.92 mol of phosphoric acid; H₄SiO₄, 0.08 mol; NH₄HF₂, 0.05 mol; sucrose, 0.005 mol; water, 20 L; |
| Example 63 | Li_{0.9}Mg_{0.05}Mn_{0.6}Fe_{0.395}V_{0.005}P_{0.9}Si_{0.1} O_{3.9}F_{0.1} | MnSO₄·H₂O, 1.2 mol; FeSO₄·H₂O, 0.79 mol; water, 10 L; oxalic acid dihydrate, 2 mol; VCl₂, 0.01 mol; | Doped manganese oxalate particles obtained in step S1, 1 mol; lithium carbonate, 0.45 mol; MgSO₄, 0.05 mol, aqueous phosphoric acid solution at a concentration of 85%, containing 0.9 mol of phosphoric acid; H₄SiO₄, 0.1 mol; NH₄HF₂, 0.05 mol; sucrose, 0.005 mol; water, 20 L; |
| Example 64 | Li_{1.1}Mg_{0.001}Mn_{0.6}Fe_{0.395}V_{0.005}P_{0.9}Si_{0. 1}O_{3.998}F_{0.002} | MnSO₄·H₂O, 1.2 mol; FeSO₄·H₂O, 0.79 mol; water, 10 L; oxalic acid dihydrate, 2 mol; VCl₂, 0.01 mol; | Doped manganese oxalate particles obtained in step S1, 1 mol; lithium carbonate, 0.55 mol; MgSO₄, 0.001 mol, aqueous phosphoric acid solution at a concentration of 85%, containing 0.9 mol of phosphoric acid; H₄SiO₄, 0.1 mol; NH₄HF₂, 0.001 mol; sucrose, 0.005 mol; water, 20 L; |
| Example 65 | Li_{0.9}Mg_{0.1}Mn_{0.6}Fe_{0.395}V_{0.005}P_{0.95}Si_{0.0 5}O_{3.95}F_{0.05} | MnSO₄·H₂O, 1.2 mol; FeSO₄·H₂O, 0.79 mol; water, 10 L; oxalic acid dihydrate, 2 mol; VCl₂, 0.01 mol; | Doped manganese oxalate particles obtained in step S1, 1 mol; lithium carbonate, 0.45 mol; MgSO₄, 0.1 mol, aqueous phosphoric acid solution at a concentration of 85%, containing 0.95 mol of phosphoric acid; H₄SiO₄, 0.05 mol; NH₄HF₂, 0.025 mol; sucrose, 0.005 mol; water, 20 L; |
| Example 66 | Li_{0.95}Mg_{0.05}Mn_{0.999}Fe_{0.001}P_{0.96}Si_{0.04}O _{3.99}F_{0.01} | MnSO₄·H₂O, 1.2 mol; FeSO₄·H₂O, 0.79 mol; water, 10 L; oxalic acid dihydrate, 2 mol; VCl₂, 0.01 mol; | Doped manganese oxalate particles obtained in step S1, 1 mol; lithium carbonate, 0.475 mol; MgSO₄, 0.05 mol, aqueous phosphoric acid solution at a concentration of 85%, containing 0.96 mol of phosphoric acid; H₄SiO₄, 0.04 mol; NH₄HF₂, 0.005 mol; sucrose, 0.005 mol; water, 20 L; |
| Example 73 | Li_{0.95}Mg_{0.05}Mn_{0.99}Fe_{0.01}P_{0.96}Si_{0.04}O₃. ₉₉F_{0.01} | MnSO₄·H₂O, 1.98 mol; FeSO₄·H₂O, 0.02 mol; water, 10 L; oxalic acid dihydrate, 2 mol; | Fe-doped manganese oxalate particles obtained in step S1, 1 mol; lithium carbonate, 0.475 mol; MgSO₄, 0.05 mol, aqueous phosphoric acid solution at a concentration of 85%, containing 0.96 mol of phosphoric acid; H₄SiO₄, 0.04 mol; NH₄HF₂, 0.01 mol; sucrose, 0.005 mol; water, 20 L; |
| Example 74 | Li_{0.95}Mg_{0.05}Mn_{0.5}Fe_{0.5}P_{0.96}Si_{0.04}O_{3.99} F_{0.01} | MnSO₄·H₂O, 1 mol; FeSO₄·H₂O, 1 mol; water, 10 L; oxalic acid dihydrate, 2 mol; | Fe-doped manganese oxalate particles obtained in step S1, 1 mol; lithium carbonate, 0.475 mol; MgSO₄, 0.05 mol, aqueous phosphoric acid solution at a concentration of 85%, containing 0.96 mol of phosphoric acid; H₄SiO₄, 0.04 mol; NH₄HF₂, 0.01 mol; sucrose, 0.005 mol; water, 20 L; |
| Example 75 | Li_{0.95}Mg_{0.05}Mn_{0.8}Fe_{0.2}P_{0.96}Si_{0.04}O_{3.99} F_{0.01} | MnSO₄·H₂O, 1.6 mol; FeSO₄·H₂O, 0.4 mol; water, 10 L; oxalic acid dihydrate, 2 mol; | Fe-doped manganese oxalate particles obtained in step S1, 1 mol; lithium carbonate, 0.475 mol; MgSO₄, 0.05 mol, aqueous phosphoric acid solution at a concentration of 85%, containing 0.96 mol of phosphoric acid; H₄SiO₄, 0.04 mol; NH₄HF₂, 0.01 mol; sucrose, 0.005 mol; water, 20 L; |
| Example 76 | Li_{0.95}Mg_{0.05}Mn_{0.75}Fe_{0.25}P_{0.96}Si_{0.04}O_{3. 99}F_{0.01} | MnSO₄·H₂O, 1.5 mol; FeSO₄·H₂O, 0.25 mol; water, 10 L; oxalic acid dihydrate, 2 mol; | Fe-doped manganese oxalate particles obtained in step S1, 1 mol; lithium carbonate, 0.475 mol; MgSO₄, 0.05 mol, aqueous phosphoric acid solution at a concentration of 85%, containing 0.96 mol of phosphoric acid; H₄SiO₄, 0.04 mol; NH₄HF₂, 0.01 mol; sucrose, 0.005 mol; water, 20 L; |
| Examples 77, 83 | Li_{0.99}sMg_{0.001}Mn_{0.60}Fe_{0.35}V_{0.05}P_{0.999}S i_{0.001}O_{3.999}F_{0.001} | MnSO₄·H₂O, 1.2 mol; FeSO₄·H₂O, 0.7 mol; water, 10 L; VCl₂, 0.1 mol; oxalic acid dihydrate, 2 mol; | Fe-doped manganese oxalate particles obtained in step S1, 1 mol; lithium carbonate, 0.499 mol; MgSO₄, 0.001 mol, aqueous phosphoric acid solution at a concentration of 85%, containing 0.999 mol of phosphoric acid; H₄SiO₄, 0.001 mol; NH₄HF₂, 0.001 mol; sucrose, 0.005 mol; water, 20 L; |
| Examples 78, 80 | Li_{0.996}Mg_{0.002}Mn_{0.55}Fe_{0.40}V_{0.05}P_{0.999}S i_{0.001}O_{3.999}F_{0.001} | MnSO₄·H₂O, 1.1 mol; FeSO₄·H₂O, 0.8 mol; VCl₂, 0.1 mol; water, 10 L; oxalic acid dihydrate, 2 mol; | Fe-doped manganese oxalate particles obtained in step S1, 1 mol; lithium carbonate, 0.498 mol; MgSO₄, 0.002 mol, aqueous phosphoric acid solution at a concentration of 85%, containing 0.999 mol of phosphoric acid; H₄SiO₄, 0.001 mol; NH₄HF₂, 0.001 mol; sucrose, 0.005 mol; water, 20 L; |
| Example 79 | Li_{0.996}Mg_{0.002}Mn_{0.60}Fe_{0.35}V_{0.05}P_{0.999}S i_{0.001}O_{3.999}F_{0.001} | MnSO₄·H₂O, 1.3 mol; FeSO₄·H₂O, 0.7 mol; water, 10 L; oxalic acid dihydrate, 2 mol; | Fe-doped manganese oxalate particles obtained in step S1, 1 mol; lithium carbonate, 0.498 mol; MgSO₄, 0.002 mol, aqueous phosphoric acid solution at a concentration of 85%, containing 0.999 mol of phosphoric acid; H₄SiO₄, 0.001 mol; NH₄HF₂, 0.001 mol; sucrose, 0.005 mol; water, 20 L; |
| Example 81 | Li_{0.994}Mg_{0.003}Mn_{0.55}Fe_{0.40}V_{0.05}P_{0.999}S i_{0.001}O_{3.999}F_{0.001} | MnSO₄·H₂O, 1.1 mol; FeSO₄·H₂O, 0.8 mol; VCl₂, 0.1 mol; water, 10 L; oxalic acid dihydrate, 2 mol; | Fe-doped manganese oxalate particles obtained in step S1, 1 mol; lithium carbonate, 0.497 mol; MgSO₄, 0.003 mol, aqueous phosphoric acid solution at a concentration of 85%, containing 0.999 mol of phosphoric acid; H₄SiO₄, 0.001 mol; NH₄HF₂, 0.001 mol; sucrose, 0.005 mol; water, 20 L; |
| Example 82 | Li_{0.998}Mg_{0.001}Mn_{0.4}Fe_{0.55}V_{0.05}P_{0.999}Si _{0.001}O_{3.999}F_{0.001} | MnSO₄·H₂O, 0.8 mol; FeSO₄·H₂O, 1.1 mol; VCl₂, 0.1 mol; water, 10 L; oxalic acid dihydrate, 2 mol; | Fe-doped manganese oxalate particles obtained in step S1, 1 mol; lithium carbonate, 0.499 mol; MgSO₄, 0.001 mol, aqueous phosphoric acid solution at a concentration of 85%, containing 0.999 mol of phosphoric acid; H₄SiO₄, 0.001 mol; NH₄HF₂, 0.001 mol; sucrose, 0.005 mol; water, 20 L; |

| | | | |
|---|---|---|---|
| *The measurement method is described in the section of "Performance test of positive electrode active material" below. | | | |

**Table 2: Preparation of first coating layer suspension (step S3)**

| No. | Coating substance in first coating layer* | Preparation of first coating layer suspension** |
|---|---|---|
| Comparative Examples 10, 12 | Amorphous Li₂FeP₂O₇ | 7.4 g of lithium carbonate; 11.6 g of ferrous carbonate; 23.0 g of ammonium dihydrogen phosphate; 12.6 g of oxalic acid dihydrate; with a pH value controlled to be 5 |
| Examples 1 to 11, 21 to 66, 69 to 89 | Crystalline Li₂FeP₂O₇ | 7.4 g of lithium carbonate; 11.6 g of ferrous carbonate; 23.0 g of ammonium dihydrogen phosphate; 12.6 g of oxalic acid dihydrate; with a pH value controlled to be 5 |
| Example 12 | Crystalline Al₄(P₂O₇)₃ | 53.3 g of aluminum chloride; 34.5 g of ammonium dihydrogen phosphate; 18.9 g of oxalic acid dihydrate; with a pH value controlled to be 4 |
| Example 13 | Crystalline Li₂NiP₂O₇ | 7.4 g of lithium carbonate; 11.9 g of nickel carbonate; 23.0 g of ammonium dihydrogen phosphate; 12.6 g of oxalic acid dihydrate; with a pH value controlled to be 5 |
| Example 14 | Crystalline Li₂MgP₂O₇ | 7.4 g of lithium carbonate; 8.4 g of magnesium carbonate; 23.0 g of ammonium dihydrogen phosphate; 12.6 g of oxalic acid dihydrate |
| Example 15 | Crystalline Li₂CoP₂O₇ | 7.4 g of lithium carbonate; 15.5 g of cobalt sulfate; 23.0 g of ammonium dihydrogen phosphate; 12.6 g of oxalic acid dihydrate |
| Example 16 | Crystalline Li₂CuP₂O₇ | 7.4 g of lithium carbonate; 16.0 g of copper sulfate; 23.0 g of ammonium dihydrogen phosphate; 12.6 g of oxalic acid dihydrate |
| Example 17 | Crystalline Li₂ZnP₂O₇ | 7.4 g of lithium carbonate; 12.5 g of zinc carbonate; 23.0 g of ammonium dihydrogen phosphate; 12.6 g of oxalic acid dihydrate |
| Example 18 | Crystalline TiP₂O₇ | 24.0 g of titanium sulfate; 23.0 g of ammonium dihydrogen phosphate; 12.6 g of oxalic acid dihydrate |
| Example 19 | Crystalline Ag₄P₂O₇ | 67.9 g of silver nitrate; 23.0 g of ammonium dihydrogen phosphate; 25.2 g of oxalic acid dihydrate |
| Example 20 | Crystalline ZrP₂O₇ | 56.6 g of zirconium sulfate; 23.0 g of ammonium dihydrogen phosphate; 25.2 g of oxalic acid dihydrate |
| Example 67 | Crystalline LiAlP₂O₇ | 3.7 g of lithium carbonate; 13.3 g of aluminum chloride; 23.0 g of ammonium dihydrogen phosphate; 12.6 g of oxalic acid dihydrate; |
| Example 68 | Crystalline Zn₂P₂O₇ | 25.0 g of zinc carbonate; 25.0 g of zinc carbonate; 23.0 g of dihydrogen phosphate press; 12.6 g of oxalic acid dihydrate; |

| | | |
|---|---|---|
| *The measurement method is described in the section of "Performance test of positive electrode active material" below; and **When the amount of coating substance in the first coating layer is multiplied or decreased, the amount of raw material used for the first coating layer suspension is multiplied or decreased accordingly. | | |

**Table 3: Application of first coating layer (step S4)**

| No. | Coating substance of first coating layer and amount thereof* (based on weight of core) | Amount of core added in step S4 | Step S4: Application of first coating layer | | | | |
|---|---|---|---|---|---|---|---|
| | | | Amount of corresponding coating substance in the first coating layer suspension | Mixing time (h) | Drying temperature (°C) | Sintering temperature (°C) | Sintering time (h) |
| Comparative Example 10 | 4% amorphous Li₂FeP₂O₇ | 157.2 g | 6.288 g | 6 | 120 | 500 | 4 |
| Comparative Example 12 | 1% amorphous Li₂FeP₂O₇ | 157.2 g | 1.572 g | 6 | 120 | 500 | 4 |
| Examples 1, 21 to 28, 50 to 62, 69 to 83, 86 to 89 | 1% crystalline Li₂FeP₂O₇ | 157.20 g | 1.572 g | 6 | 120 | 650 | 6 |
| Example 2 | 1% crystalline Li₂FeP₂O₇ | 157.05 g | 1.571 g | 6 | 120 | 650 | 6 |
| Example 3 | 1% crystalline Li₂FeP₂O₇ | 157.28 g | 1.573 g | 6 | 120 | 650 | 6 |
| Example 4 | 1% crystalline Li₂FeP₂O₇ | 157.18 g | 1.572 g | 6 | 120 | 650 | 6 |
| Example 5 | 1% crystalline Li₂FeP₂O₇ | 157.17 g | 1.572 g | 6 | 120 | 650 | 6 |
| Example 6 | 1% crystalline Li₂FeP₂O₇ | 157.02 g | 1.570 g | 6 | 120 | 650 | 6 |
| Example 7 | 1% crystalline Li₂FeP₂O₇ | 157.19 g | 1.572 g | 6 | 120 | 650 | 6 |
| Example 8 | 1% crystalline Li₂FeP₂O₇ | 157.19 g | 1.572 g | 6 | 120 | 650 | 6 |
| Example 9 | 1% crystalline Li₂FeP₂O₇ | 157.21 g | 1.572 g | 6 | 120 | 650 | 6 |
| Example 10 | 1% crystalline Li₂FeP₂O₇ | 157.09 g | 1.571 g | 6 | 120 | 650 | 6 |
| Example 11 | 1% crystalline Li₂FeP₂O₇ | 157.20 g | 1.572 g | 6 | 120 | 650 | 6 |
| Example 12 | 1% crystalline Al₄(P₂O₇)₃ | 157.20 g | 1.572 g | 6 | 120 | 680 | 8 |
| Example 13 | 1% crystalline Li₂NiP₂O₇ | 157.20 g | 1.572 g | 6 | 120 | 630 | 6 |
| Example 14 | 1% crystalline Li₂MgP₂O₇ | 157.20 g | 1.572 g | 7 | 120 | 660 | 6 |
| Example 15 | 1% crystalline Li₂CoP₂O₇ | 157.20 g | 1.572 g | 6 | 120 | 670 | 6 |
| Example 16 | 1% crystalline Li₂CuP₂O₇ | 157.20 g | 1.572 g | 8 | 120 | 640 | 6 |
| Example 17 | 1% crystalline Li₂ZnP₂O₇ | 157.20 g | 1.572 g | 8 | 120 | 650 | 6 |
| Example 18 | 1% crystalline TiP₂O₇ | 157.20 g | 1.572 g | 7 | 120 | 660 | 6 |
| Example 19 | 1% crystalline Ag₄P₂O₇ | 157.20 g | 1.572 g | 9 | 120 | 670 | 6 |
| Example 20 | 1% crystalline ZrP₂O₇ | 157.20 g | 1.572 g | 8 | 120 | 680 | 6 |
| Example 29 | 1% crystalline Li₂FeP₂O₇ | 157.01 g | 1.570 g | 6 | 120 | 650 | 6 |
| Example 30 | 1% crystalline Li₂FeP₂O₇ | 157.10 g | 1.571 g | 6 | 120 | 650 | 6 |
| Example 31 | 1% crystalline Li₂FeP₂O₇ | 156.85 g | 1.569 g | 6 | 120 | 650 | 6 |
| Example 32 | 1% crystalline Li₂FeP₂O₇ | 156.97 g | 1.570 g | 6 | 120 | 650 | 6 |
| Example 33 | 1% crystalline Li₂FeP₂O₇ | 156.97 g | 1.570 g | 6 | 120 | 650 | 6 |
| Example 34 | 1% crystalline Li₂FeP₂O₇ | 156.96 g | 1.570 g | 6 | 120 | 650 | 6 |
| Example 35 | 1% crystalline Li₂FeP₂O₇ | 157.09 g | 1.571 g | 6 | 120 | 650 | 6 |
| Example 36 | 1% crystalline Li₂FeP₂O₇ | 157.24 g | 1.572 g | 6 | 120 | 650 | 6 |
| Example 37 | 1% crystalline Li₂FeP₂O₇ | 157.30 g | 1.573 g | 6 | 120 | 650 | 6 |
| Example 38 | 1% crystalline Li₂FeP₂O₇ | 157.07 g | 1.571 g | 6 | 120 | 650 | 6 |
| Example 39 | 1% crystalline Li₂FeP₂O₇ | 157.13 g | 1.571 g | 6 | 120 | 650 | 6 |
| Example 40 | 1% crystalline Li₂FeP₂O₇ | 157.15 g | 1.572 g | 6 | 120 | 650 | 6 |
| Example 41 | 1% crystalline Li₂FeP₂O₇ | 157.29 g | 1.573 g | 6 | 120 | 650 | 6 |
| Example 42 | 1% crystalline Li₂FeP₂O₇ | 157.38 g | 1.574 g | 6 | 120 | 650 | 6 |
| Example 43 | 1% crystalline Li₂FeP₂O₇ | 157.37 g | 1.574 g | 6 | 120 | 650 | 6 |
| Example 44 | 1% crystalline Li₂FeP₂O₇ | 157.15 g | 1.572 g | 6 | 120 | 650 | 6 |
| Example 45 | 2% crystalline Li₂FeP₂O₇ | 157.20 g | 3.14 g | 6 | 120 | 650 | 6 |
| Example 46 | 3% crystalline Li₂FeP₂O₇ | 157.20 g | 4.71 g | 6 | 120 | 650 | 6 |
| Example 47 | 4% crystalline Li₂FeP₂O₇ | 157.20 g | 6.28 g | 6 | 120 | 650 | 6 |
| Example 48 | 5.5% crystalline Li₂FeP₂O₇ | 157.20 g | 8.635 g | 6 | 120 | 650 | 6 |
| Example 49 | 6% crystalline Li₂FeP₂O₇ | 157.20 g | 9.42 g | 6 | 120 | 650 | 6 |
| Example 63 | 1% crystalline Li₂FeP₂O₇ | 157.70 g | 1.577 g | 6 | 120 | 650 | 6 |
| Example 64 | 1% crystalline Li₂FeP₂O₇ | 157.61 g | 1.576 g | 6 | 120 | 650 | 6 |
| Example 65 | 1% crystalline Li₂FeP₂O₇ | 158.91 g | 1.589 g | 6 | 120 | 650 | 6 |
| Example 66 | 1% crystalline Li₂FeP₂O₇ | 157.62 g | 1.576 g | 6 | 120 | 650 | 6 |
| Example 67 | 1% crystalline LiAlP₂O₇ | 157.20 g | 1.572 g | 8 | 120 | 690 | 6 |
| Example 68 | 1% crystalline Zn₂P₂O₇ | 157.20 g | 1.572 g | 8 | 120 | 700 | 6 |
| Example 84 | 0.33% crystalline Li₂FeP₂O₇ | 157.20 g | 0.524 | 6 | 120 | 650 | 6 |
| Example 85 | 3.3% crystalline Li₂FeP₂O₇ | 157.20 g | 5.24 | 6 | 120 | 650 | 6 |

| | | | | | | | |
|---|---|---|---|---|---|---|---|
| *The measurement method is described in the section of "Performance test of positive electrode active material" below. | | | | | | | |

**Table 4: Preparation of second coating layer suspension (step S5)**

| No. | Coating substance in second coating layer* | Step S5: Preparation of second coating layer suspension** |
|---|---|---|
| Comparative Examples 11, 12; Examples 1 to 20, 29 to 71, 73 to 89 | Crystalline Al₂O₃ | 4.71 g of nanoscale Al₂O₃ (particle size of about 20 nm) was dissolved in 1500 mL of deionized water, and the mixture was stirred for 2h to obtain a suspension |
| Example 21 | Crystalline CoO | 4.71 g of nanoscale CoO (particle size of about 20 nm) was dissolved in 1500 mL of deionized water, and the mixture was stirred for 2h to obtain a suspension |
| Example 22 | Crystalline NiO | 4.71 g of nanoscale NiO (particle size of about 20 nm) was dissolved in 1500 mL of deionized water, and the mixture was stirred for 2h to obtain a suspension |
| Example 23 | Crystalline CuO | 4.71 g of nanoscale CuO (particle size of about 20 nm) was dissolved in 1500 mL of deionized water, and the mixture was stirred for 2h to obtain a suspension |
| Example 24 | Crystalline ZnO | 4.71 g of nanoscale ZnO (particle size of about 20 nm) was dissolved in 1500 mL of deionized water, and the mixture was stirred for 2h to obtain a suspension |
| Example 25 | Crystalline TiO₂ | 4.71 g of nanoscale TiO₂ (particle size of about 20 nm) was dissolved in 1500 mL of deionized water, and the mixture was stirred for 2h to obtain a suspension |
| Example 26 | Crystalline MgO | 4.71 g of nanoscale MgO (particle size of about 20 nm) was dissolved in 1500 mL of deionized water, and the mixture was stirred for 2h to obtain a suspension |
| Example 27 | Crystalline ZrO₂ | 4.71 g of nanoscale ZrO₂ (particle size of about 20 nm) was dissolved in 1500 mL of deionized water, and the mixture was stirred for 2h to obtain a suspension |
| Example 28 | Crystalline CaO | 4.71 g of nanoscale CaO (particle size of about 20 nm) was dissolved in 1500 mL of deionized water, and the mixture was stirred for 2h to obtain a suspension |
| Example 72 | Crystalline V₂O₅ | 4.71 g of nanoscale V₂O₅ (particle size of about 20 nm) was dissolved in 1500 mL of deionized water, and the mixture was stirred for 2h to obtain a suspension |

| | | |
|---|---|---|
| *The measurement method is described in the section of "Performance test of positive electrode active material" below; and **When the amount of coating substance in the second coating layer is multiplied or decreased, the amount of raw material used for the second coating layer suspension is multiplied or decreased accordingly (but the amount of deionized water remains unchanged). | | |

**Table 5: Application of second coating layer (step S6)**

| No. | Coating substance in second coating layer and its amount (based on weight of core)* | Amount of pyrophosphate-enveloped material added in step S6 (where amount of Comparative Example 12 is the amount of core added) (g) | Step S6: Application of second coating layer | | | | |
|---|---|---|---|---|---|---|---|
| | | | Amount of corresponding coating substance in second coating layer suspension (g) | Mixing time (h) | Drying temperature (°C) | Sintering temperature (°C) | Sintering time (h) |
| Comparative Example 11 | 4% crystalline Al₂O₃ | 157.2 | 6.288 | 6 | 120 | 750 | 8 |
| Comparative Example 12; Examples 29 to 49, 55 to 68 | 3% crystalline Al₂O₃ | 158.772 | 4.71 | 6 | 120 | 700 | 8 |
| Examples 1, 88, 89 | 3% crystalline Al₂O₃ | 158.772 | 4.71 | 6 | 120 | 700 | 8 |
| Example 2 | 3% crystalline Al₂O₃ | 158.621 | 4.72 | 6 | 120 | 700 | 8 |
| Example 3 | 3% crystalline Al₂O₃ | 158.853 | 4.72 | 6 | 120 | 700 | 8 |
| Example 4 | 3% crystalline Al₂O₃ | 158.752 | 4.72 | 6 | 120 | 700 | 8 |
| Example 5 | 3% crystalline Al₂O₃ | 158.742 | 4.72 | 6 | 120 | 700 | 8 |
| Example 6 | 3% crystalline Al₂O₃ | 158.590 | 4.71 | 6 | 120 | 700 | 8 |
| Example 7 | 3% crystalline Al₂O₃ | 158.762 | 4.72 | 6 | 120 | 700 | 8 |
| Example 8 | 3% crystalline Al₂O₃ | 158.762 | 4.72 | 6 | 120 | 700 | 8 |
| Example 9 | 3% crystalline Al₂O₃ | 158.782 | 4.72 | 6 | 120 | 700 | 8 |
| Example 10 | 3% crystalline Al₂O₃ | 158.661 | 4.71 | 6 | 120 | 700 | 8 |
| Examples 11 to 20 | 3% crystalline Al₂O₃ | 158.772 | 4.71 | 6 | 120 | 700 | 8 |
| Example 21 | 3% crystalline CoO | 158.772 | 4.71 | 6 | 120 | 700 | 8 |
| Example 22 | 3% crystalline NiO | 158.772 | 4.71 | 6 | 120 | 710 | 8 |
| Example 23 | 3% crystalline CuO | 158.772 | 4.71 | 6 | 120 | 710 | 8 |
| Example 24 | 3% crystalline ZnO | 158.772 | 4.71 | 6 | 120 | 730 | 8 |
| Example 25 | 3% crystalline TiO₂ | 158.772 | 4.71 | 6 | 120 | 730 | 8 |
| Example 26 | 3% crystalline MgO | 158.772 | 4.71 | 6 | 120 | 680 | 8 |
| Example 27 | 3% crystalline ZrO₂ | 158.772 | 4.71 | 6 | 120 | 750 | 8 |
| Example 28 | 3% crystalline CaO | 158.772 | 4.71 | 6 | 120 | 700 | 8 |
| Example 50 | 1% crystalline Al₂O₃ | 158.772 | 15.71.57 | 6 | 120 | 700 | 8 |
| Example 51 | 2% crystalline Al₂O₃ | 158.772 | 3.14 | 6 | 120 | 700 | 8 |
| Example 52 | 4% crystalline Al₂O₃ | 158.772 | 6.28 | 6 | 120 | 700 | 8 |
| Example 53 | 5.5% crystalline Al₂O₃ | 158.772 | 8.64 | 6 | 120 | 700 | 8 |
| Example 54 | 6% crystalline Al₂O₃ | 158.772 | 9.42 | 6 | 120 | 700 | 8 |
| Example 69 | 3% crystalline Al₂O₃ | 158.772 | 4.71 | 6 | 120 | 700 | 8 |
| Example 70 | 3% crystalline Al₂O₃ | 158.772 | 4.71 | 6 | 120 | 700 | 8 |
| Example 71 | 3% crystalline Al₂O₃ | 158.772 | 4.71 | 6 | 120 | 700 | 8 |
| Example 72 | 3% crystalline V₂O₅ | 158.772 | 4.71 | 6 | 120 | 700 | 8 |
| Example 73 | 3% crystalline Al₂O₃ | 159 | 4.71 | 6 | 120 | 700 | 8 |
| Example 74 | 3% crystalline Al₂O₃ | 158.772 | 4.71 | 6 | 120 | 700 | 8 |
| Example 75 | 3% crystalline Al₂O₃ | 158.772 | 4.71 | 6 | 120 | 700 | 8 |
| Example 76 | 3% crystalline Al₂O₃ | 158.772 | 4.71 | 6 | 120 | 700 | 8 |
| Example 77 | 3% crystalline Al₂O₃ | 158.772 | 4.71 | 6 | 120 | 700 | 8 |
| Example 78 | 3% crystalline Al₂O₃ | 158.772 | 4.71 | 6 | 120 | 700 | 8 |
| Example 79 | 3% crystalline Al₂O₃ | 158.772 | 4.71 | 6 | 120 | 700 | 8 |
| Example 80 | 3% crystalline Al₂O₃ | 158.772 | 4.71 | 6 | 120 | 700 | 8 |
| Example 81 | 3% crystalline Al₂O₃ | 158.772 | 4.71 | 6 | 120 | 700 | 8 |
| Example 82 | 3% crystalline Al₂O₃ | 158.772 | 4.71 | 6 | 120 | 700 | 8 |
| Example 83 | 1% crystalline Al₂O₃ | 158.772 | 1.57 | 6 | 120 | 700 | 8 |
| Example 84 | Same as Example 1 | 157.71 | 4.71 | 6 | 120 | 700 | 8 |
| Example 85 | Same as Example 1 | 162.38 | 4.71 | 6 | 120 | 700 | 8 |
| Example 86 | 0.33% crystalline Al₂O₃ | 158.772 | 0.51 | 6 | 120 | 700 | 8 |
| Example 87 | 6% crystalline Al₂O₃ | 158.772 | 9.42 | 6 | 120 | 720 | 12 |

| | | | | | | | |
|---|---|---|---|---|---|---|---|
| *The measurement method is described in the section of "Performance test of positive electrode active material" below. | | | | | | | |

**Table 6: Application of third coating layer (step S8)**

| No. | Third coating layer* | Molar ratio of SP2 to SP3* | Amount of two-layer-enveloped material added in step S8 (where amounts of Comparative Examples 1 to 9 are the amount of core added, amount of Comparative Example 10 are the amount of first-layer-enveloped material added, and Comparative Example 11 is the amount of only-second-layer-enveloped material added) (g) | Step S8: Application of third coating layer | | | | |
|---|---|---|---|---|---|---|---|---|
| | | | | Amount of sucrose (g) | Mixing time (h) | Drying temperature (°C) | Sintering temperature (°C) | Sintering time (h) |
| Comparative Example 1 | 1% carbon | 2.5 | 1568.5 | 37.3 | 6 | 150 | 650 | 8 |
| Comparative Example 2 | 1% carbon | 2.4 | 1571.0 | 37.3 | 6 | 150 | 630 | 8 |
| Comparative Example 3 | 1% carbon | 2.7 | 1572.2 | 37.3 | 6 | 150 | 680 | 7 |
| Comparative Example 4 | 1% carbon | 2.2 | 1572.2 | 37.3 | 6 | 150 | 600 | 8 |
| Comparative Example 5 | 1% carbon | 2.4 | 1571.1 | 37.3 | 6 | 150 | 630 | 8 |
| Comparative Example 6 | 1% carbon | 2.3 | 1586.8 | 37.3 | 6 | 150 | 620 | 8 |
| Comparative Example 7 | 1% carbon | 2.1 | 1618.2 | 37.3 | 6 | 150 | 600 | 6 |
| Comparative Example 8 | 1% carbon | 2 | 1662.6 | 37.3 | 6 | 120 | 600 | 6 |
| Comparative Example 9 | 1% carbon | 1.8 | 1656.5 | 37.1 | 6 | 120 | 600 | 6 |
| Comparative Example 10 | 1% carbon | 1.7 | 1664.8 | 37.3 | 6 | 100 | 600 | 6 |
| Comparative Example 11 | 1% carbon | 3.1 | 1665.4 | 37.3 | 6 | 150 | 700 | 10 |
| Comparative Example 12 | 1% carbon | 3.5 | 1665.4 | 37.3 | 6 | 150 | 750 | 10 |
| Examples 1, 12 to 44, 60 to 68, 84 to 87 | 1% carbon | 2.2 | 1633.9 | 37.3 | 6 | 150 | 700 | 10 |
| Example 2 | 1% carbon | 2.5 | 1649.6 | 37.3 | 6 | 150 | 650 | 8 |
| Example 3 | 1% carbon | 2.5 | 1665.3 | 37.3 | 6 | 150 | 650 | 8 |
| Example 4 | 1% carbon | 2.4 | 1696.7 | 37.3 | 6 | 150 | 630 | 8 |
| Example 5 | 1% carbon | 2.3 | 1602.5 | 37.3 | 6 | 150 | 600 | 9 |
| Example 6 | 1% carbon | 2.2 | 1649.6 | 37.3 | 6 | 150 | 600 | 8 |
| Example 7 | 1% carbon | 2.2 | 1665.3 | 37.3 | 6 | 150 | 600 | 9 |
| Example 8 | 1% carbon | 2.7 | 1666.2 | 37.3 | 6 | 150 | 680 | 7 |
| Example 9 | 1% carbon | 2.6 | 1633.0 | 37.3 | 6 | 150 | 650 | 7 |
| Example 10 | 1% carbon | 2.2 | 1666.4 | 37.3 | 6 | 150 | 600 | 9 |
| Example 11 | 1% carbon | 2.3 | 1721.4 | 37.3 | 6 | 150 | 600 | 9 |
| Example 45 | 1% carbon | 2.4 | 1690.0 | 37.3 | 6 | 150 | 630 | 8 |
| Example 46 | 1% carbon | 2.4 | 1635.9 | 37.4 | 6 | 150 | 630 | 8 |
| Example 47 | 1% carbon | 2.3 | 1631.3 | 37.3 | 6 | 150 | 600 | 9 |
| Example 48 | 1% carbon | 0.07 | 1668.3 | 37.4 | 6 | 80 | 600 | 6 |
| Example 49 | 1% carbon | 13 | 1668.3 | 37.4 | 6 | 150 | 850 | 10 |
| Example 50 | 1% carbon | 2.3 | 1721.4 | 37.3 | 6 | 150 | 600 | 9 |
| Example 51 | 1% carbon | 2.4 | 1690.0 | 37.3 | 6 | 150 | 630 | 8 |
| Example 52 | 1% carbon | 2.4 | 1635.9 | 37.4 | 6 | 150 | 630 | 8 |
| Example 53 | 1% carbon | 2.4 | 1634.6 | 37.4 | 6 | 150 | 630 | 8 |
| Example 54 | 1% carbon | 2.3 | 1633.9 | 37.4 | 6 | 150 | 600 | 9 |
| Example 55 | 2% carbon | 2.1 | 1633.9 | 74.7 | 6 | 150 | 600 | 6 |
| Example 56 | 3% carbon | 2.6 | 1666.4 | 111.9 | 6 | 150 | 650 | 7 |
| Example 57 | 4% carbon | 2.6 | 1633.9 | 149.2 | 6 | 150 | 650 | 7 |
| Example 58 | 5.5% carbon | 2.8 | 1642.6 | 205.4 | 6 | 150 | 680 | 8 |
| Example 59 | 6% carbon | 2.3 | 1633.9 | 224.4 | 6 | 150 | 600 | 9 |
| Example 69 | 1% carbon | 0.1 | 1633.9 | 37.3 | 6 | 85 | 400 | 2 |
| Example 70 | 1% carbon | 10 | 1633.9 | 37.3 | 6 | 150 | 800 | 20 |
| Example 71 | 1% carbon | 3 | 1633.9 | 37.3 | 6 | 150 | 680 | 8 |
| Example 72 | 1% carbon | 2.5 | 1633.9 | 37.3 | 6 | 150 | 680 | 8 |
| Example 73 | 1% carbon | 2.3 | 1633.9 | 37.3 | 6 | 150 | 700 | 10 |
| Example 74 | 1% carbon | 2.6 | 1633.9 | 37.3 | 6 | 150 | 700 | 10 |
| Example 75 | 1% carbon | 2.5 | 1633.9 | 37.3 | 6 | 150 | 700 | 10 |
| Example 76 | 1% carbon | 2.4 | 1633.9 | 37.3 | 6 | 150 | 700 | 10 |
| Example 77 | 1% carbon | 2.6 | 1633.9 | 37.3 | 6 | 150 | 700 | 10 |
| Example 78 | 1% carbon | 2.5 | 1633.9 | 37.3 | 6 | 150 | 700 | 10 |
| Example 79 | 1% carbon | 2.3 | 1633.9 | 37.3 | 6 | 150 | 700 | 10 |
| Example 80 | 1% carbon | 2.6 | 1633.9 | 37.3 | 6 | 150 | 700 | 10 |
| Example 81 | 1% carbon | 2.5 | 1633.9 | 37.3 | 6 | 150 | 700 | 10 |
| Example 82 | 1% carbon | 2.4 | 1633.9 | 37.3 | 6 | 150 | 700 | 10 |
| Example 83 | 1% carbon | 2.4 | 1633.9 | 37.3 | 6 | 150 | 700 | 10 |
| Example 88 | 0.4% carbon | 2.2 | 1633.9 | 14.92 | 6 | 150 | 700 | 10 |
| Example 89 | 5% carbon | 2.2 | 1633.9 | 186.5 | 6 | 150 | 700 | 10 |

| | | | | | | | | |
|---|---|---|---|---|---|---|---|---|
| *The measurement method is described in the section of "Performance test of positive electrode active material" below. | | | | | | | | |

### Preparation of positive electrode plate

The prepared three-layer-enveloped positive electrode active material, a conductive agent acetylene black, and a binder polyvinylidene fluoride (PVDF) were added at a weight ratio of 97.0:1.2:1.8 to N-methylpyrrolidone (NMP), stirred and mixed to uniformity to obtain a positive electrode slurry. The positive electrode slurry was applied onto an aluminum foil at 0.280 g/1540.25 mm², followed by drying and cold pressing, to obtain a positive electrode plate.

### Preparation of negative electrode plate

A negative electrode active material artificial graphite, a conductive agent super-conductive carbon black (Super-P), a binder styrene butadiene rubber (SBR), and a thickener sodium carboxymethyl cellulose (CMC-Na) were dissolved at a mass ratio of 95%:1.5%:1.8%:1.7% in deionized water, fully stirred, and mixed to uniformity to obtain a negative electrode slurry with a viscosity of 3000 mPa·s and a solid content of 52%. The negative electrode slurry was applied on a 6 µm negative electrode current collector copper foil, followed by baking at 100°C for drying for 4 hours and roll pressing, to obtain a negative electrode plate with a compacted density of 1.75 g/cm³.

### Separator

A polypropylene film was used.

### Preparation of electrolyte

Ethylenecarbonate, dimethyl carbonate, and 1,2-propanediol carbonate were mixed at a volume ratio of 1:1:1, and then LiPF₆ was evenly dissolved in such solution, to obtain an electrolyte. In the electrolyte, a concentration of LiPF₆ was 1 mol/L.

### Preparation of full battery

The positive electrode plate, separator, and negative electrode plate obtained above were stacked in order, so that the separator was placed between the positive and negative electrodes for separation, and winding was performed to obtain a jelly roll. The jelly roll was placed in an outer package, the electrolyte was injected, and the outer package was sealed to obtain a full battery (also referred to as "full battery" hereinafter).

### Preparation of button battery

The foregoing positive electrode plate, the negative electrode, and the electrolyte were assembled into a button battery (hereinafter also referred to as "button battery") in a button box.

### I. Performance test of positive electrode active material

### 1. Test method of lattice change rate:

At a constant temperature of 25°C, the positive electrode active material samples were placed in an XRD instrument (model: Bruker D8 Discover), and the samples were tested at 1°/min. The test data were organized and analyzed, and the lattice constants a0, b0, c0, and v0 (where a0, b0, and c0 represent the lengths of faces of the unit cell, and v0 denotes the volume of the unit cell, which can be obtained directly from XRD refinement results) at this moment were calculated with reference to standard PDF cards.

The positive electrode active material samples were prepared into button batteries using the foregoing button battery preparation method, and the button batteries were charged at a small rate of 0.05C until the current was reduced to 0.01C. The positive electrode plate was then taken out from the button battery and placed in dimethyl carbonate (DMC) for 8 hours, dried, and scraped for powder, and particles with a particle size less than 500 nm were sifted out from the powder. Samples were taken and subjected to the same way as the fresh samples under test above to calculate their unit cell volumes v1, and (v0-v1)/v0×100% was taken as their lattice change rates (volume change rate of unit cell) before and after complete deintercalation of lithium.

### 2. Determination of Li/Mn anti-site defect concentration:

The XRD results tested in "test method of lattice change rate" were compared with the PDF (Powder Diffraction File) card of the standard crystal to obtain the Li/Mn anti-site defect concentration. Specifically, the XRD results tested in the "test method of lattice change rate" were imported into the general structural analysis system (GSAS) software to automatically derive the refinement results, which contain the occupancy of the different atoms, and then the Li/Mn anti-site defect concentration was obtained by reading the refinement results.

### 3. Determination of compacted density:

5 g of the foregoing prepared positive electrode active material powder was taken and put in a special mold for compaction (CARVER mold, model 13 mm, USA), and then the mold was put on the compacted density apparatus. A pressure of 3 tons was applied, the thickness of the powder under pressure (thickness after pressure relief) on the apparatus was read, and the compacted density was calculated based on ρ=m/v, where the area value used was the area of standard small picture, 1540.25 mm².

### 4. Determination of ratio of 3C constant current charge:

New full batteries prepared from the foregoing examples and comparative examples were left standing for 5 min at 25°C in a constant temperature environment and discharged to 2.5 V at 1/3C. The full batteries were left standing for 5 min, charged to 4.3 V at 1/3C, and then charged at a constant voltage of 4.3 V to a current less than or equal to 0.05 mA. The full batteries were left standing for 5 min. The charge capacity at this moment was recorded as C0. The full batteries were discharge at 1/3C to 2.5 V, left standing for 5 min, then charged at 3C to 4.3 V, and left standing for 5 min. The charge capacity at this moment was recorded as C1. The ratio of 3C constant current charge was C1/C0×100%.

A higher ratio of 3C constant current charge indicates better rate performance of the secondary battery.

### 5. Transition metal Mn (and Fe doping at the Mn site) dissolution test:

Full batteries prepared from the positive electrode active materials of the foregoing examples and comparative examples and cycled at 45°C until capacity faded to 80% were discharged to a cut-off voltage of 2.0 V at 0.1C. The battery was then disassembled, the negative electrode plate was removed, and 30 discs with a unit area (1540.25 mm²) were randomly taken on the negative electrode plate and tested by using Agilent ICP-OES730 for inductively coupled plasma atomic emission spectrometry (ICP). The amounts of Fe (if the Mn site of the positive electrode active material was doped with Fe) and Mn were calculated from the ICP results, so as to calculate the dissolving-out amount of Mn (and Fe doping at the Mn site) after the cycling. The test standard is in accordance with EPA-6010D-2014.

### 6. Determination of surface oxygen valence:

5 g of the foregoing prepared positive electrode active material sample was taken to prepare into a button battery according to the preparation method of button battery as described above. The button battery was charged at a small rate of 0.05C until the current was reduced to 0.01C. The positive electrode plate was then taken out from the button battery and placed in DMC for 8 hours, dried, and scraped for powder, and particles with a particle size less than 500 nm were sifted out from the powder. The thus obtained particles were measured by using electron energy loss spectroscopy (EELS; the model of the instrument used was Talos F200S) to obtain energy loss near edge structures (ELNES) that reflect the density of states and energy level distribution of elements. Based on the density of states and energy level distribution, the number of occupying electrons was calculated by integrating the data of the valence band density of states to deduce the surface oxygen valence after charging.

### 7. Measurement of elements manganese and phosphorus in positive electrode active material:

5 g of the foregoing prepared positive electrode active material was dissolved in 100 ml of inverse aqua regia (concentrated hydrochloric acid concentrated nitric acid = 1:3) (concentration of concentrated hydrochloric acid is about 37%, and concentration of concentrated nitric acid is about 65%), the content of each element in the solution was tested using ICP, and then the content of element manganese or element phosphorus (amount of element manganese or element phosphorus/amount of positive electrode active material × 100%) was measured and converted to get its weight percentage.

### 8. Initial gram capacity test method of button battery:

Under a voltage of 2.5 V to 4.3 V, the prepared button batteries of the foregoing examples and comparative examples were charged to 4.3 V at 0.1C, then charged at constant voltage of 4.3 V to a current less than or equal to 0.05 mA, left standing for 5 min, and then discharged to 2.0 V at 0.1C. The discharge capacity at this moment was an initial gram capacity and recorded as D0.

### 9. Cell swelling test of full battery after 30 days of storage at 60°C:

The prepared full batteries of the foregoing examples and comparative examples at 100% state of charge (SOC) were stored at 60°C. The open circuit voltage (OCV) and alternating current internal resistance (IMP) of the cells were measured before, during, and after storage to monitor the SOCs and the volumes of the cells were measured. The full batteries were taken out after every 48h of storage and left standing for 1h. Then the open circuit voltage (OCV) and internal resistance (IMP) were measured, and the cell volumes were measured by a drainage method after the cells were cooled to room temperature. In the drainage method, first a scale that automatically performs unit conversion on dial data was used to separately measure a weight of the cell, denoted as F₁, then the cell was completely placed into deionized water (density given to be 1 g/cm³), and the weight of the cell at this moment was measured as F₂. The buoyant force experienced by the cell, denoted as F_{buoyant}, was calculated as F₁-F₂. Then, according to Archimedes' principle, F_{buoyant} = ρ × g × V_{displaced}, the volume V of the cell could be calculated as V=(F₁-F₂)/(ρ × g).

It can be learned from the OCV and IMP test results that the batteries of all the examples always maintained an SOC of higher than 99% throughout the storage test.

After 30 days of storage, the cell volumes were measured and the percentage increases in the cell volumes after storage relative to the cell volumes before storage were calculated.

### 10. 45°C cycling performance test of full battery:

At a constant temperature of 45°C, the battery was charged to 4.3 V at 1C under a voltage of 2.5 V to 4.3 V, and then charged to a current less than or equal to 0.05 mA at a constant voltage of 4.3 V After being left standing for 5 min, the battery was discharged to 2.5 V at 1C, and a capacity at this moment was recorded as Dₙ (n=0, 1, 2, ...). The previous process was repeated until the capacity was faded (fading) to 80%, and the number of repetitions at this moment was record, which is the number of cycles corresponding to 80% capacity retention rate at 45°C.

### 11. Interplanar spacing and included angle test:

1 g of each prepared positive electrode active material powder was taken and placed into a 50 mL test tube, 10 mL of alcohol with a mass fraction of 75% was injected into the test tube, and the substances were then fully stirred and dispersed for 30 minutes. Then an appropriate amount of the solution was taken with a clean disposable plastic pipette and added dropwise on a 300 mesh copper grid. At this moment, part of the powder would remain on the copper grid. The copper grid with the sample was transferred to the TEM (Talos F200s G2) sample cavity for testing, and original TEM test images were obtained and saved in an original image format (xx.dm3).

The original image obtained from the TEM test was opened in DigitalMicrograph software, and Fourier transform was performed (done automatically by the software upon clicking) to obtain a diffraction pattern. A distance from the diffraction spot to the center of the diffraction pattern was measured to obtain the interplanar spacing, and the included angle was calculated according to the Bragg equation.

By comparing the obtained interplanar spacing and corresponding included angle with their respective standard values, the substances and crystalline states of different coating layers could be identified.

### 12. Coating layer thickness test:

The thickness of the coating was tested mainly in the following manner. A thin slice of about 100 nm thickness was cut from the middle of a single particle of the prepared positive electrode active material by FIB, then a TEM test was performed on the thin slice, and original TEM test images were obtained and saved in an original image format (xx.dm3).

The original image obtained from the TEM test was opened in DigitalMicrograph software, the coating was identified by using the information of the lattice spacing and included angle, and the thickness of the coating was measured.

The thicknesses at three locations were measured for the selected particle and the average value was taken.

### 13. Measurement of molar ratio of SP2 carbon to SP3 carbon in the carbon in third coating layer:

This test was performed by Raman (Raman) spectroscopy. The energy spectrum of the Raman test was split to obtain Id/Ig, where Id is a peak intensity of SP3 carbon and Ig is a peak intensity of SP2 carbon, and then the molar ratio therebetween was determined.

### 14. Determination of chemical formula of core and composition of different coatings:

An aberration corrected scanning transmission electron microscope (ACSTEM) was used for high spatial resolution characterization of the internal microstructure and surface structure of the positive electrode active material, and the chemical formula of the core and the compositions of different coating layers of the positive electrode active material were obtained in combination with three-dimensional reconstruction techniques.

The performance test results of the positive electrode active materials of the examples and the comparative examples are shown in the following tables.

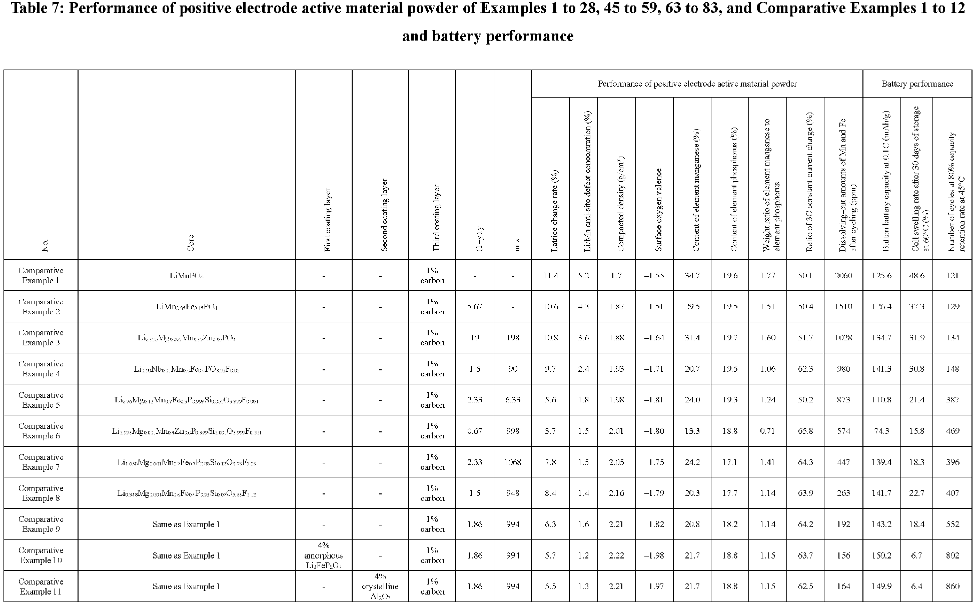

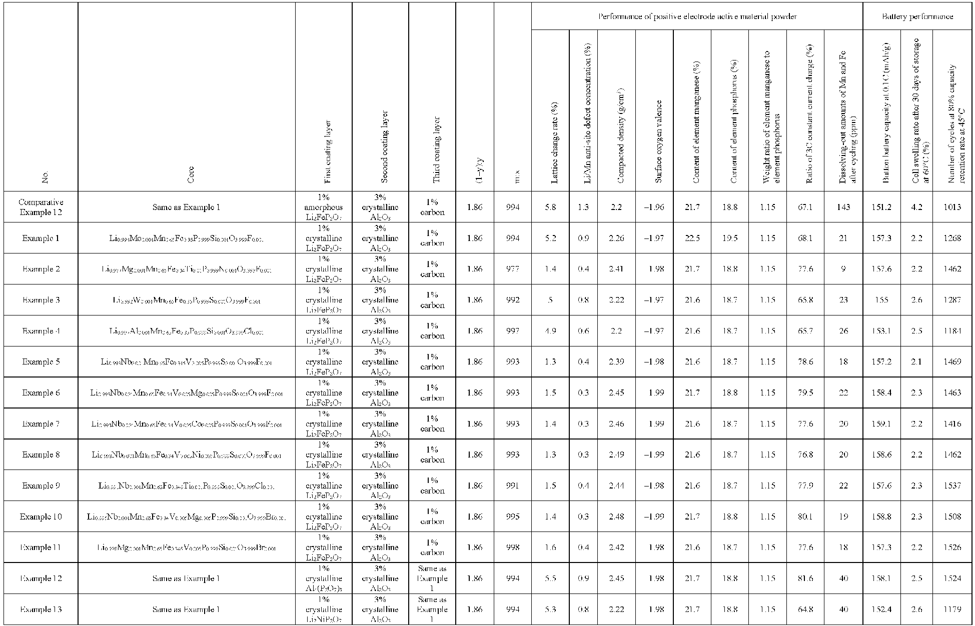

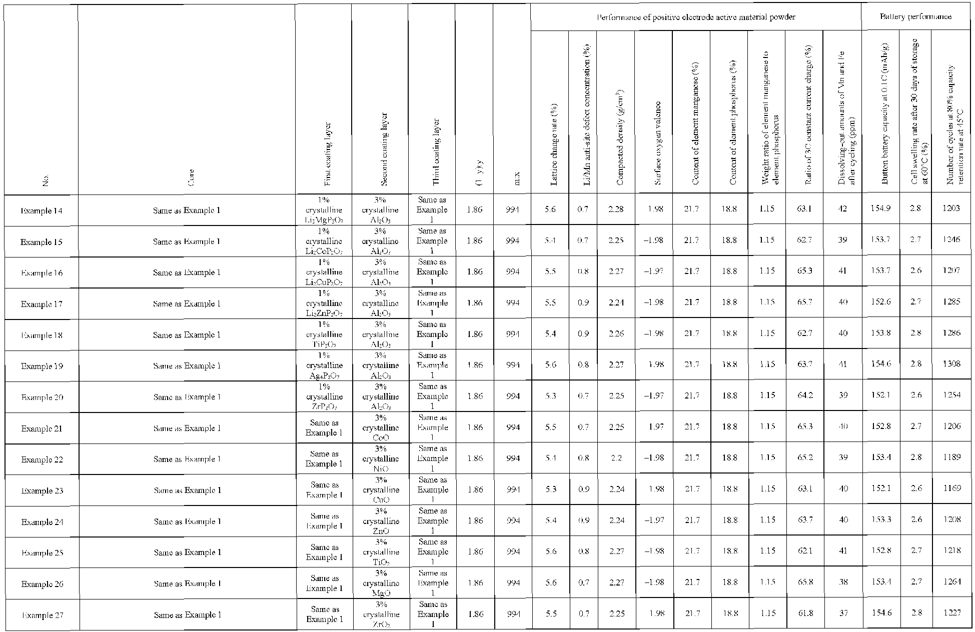

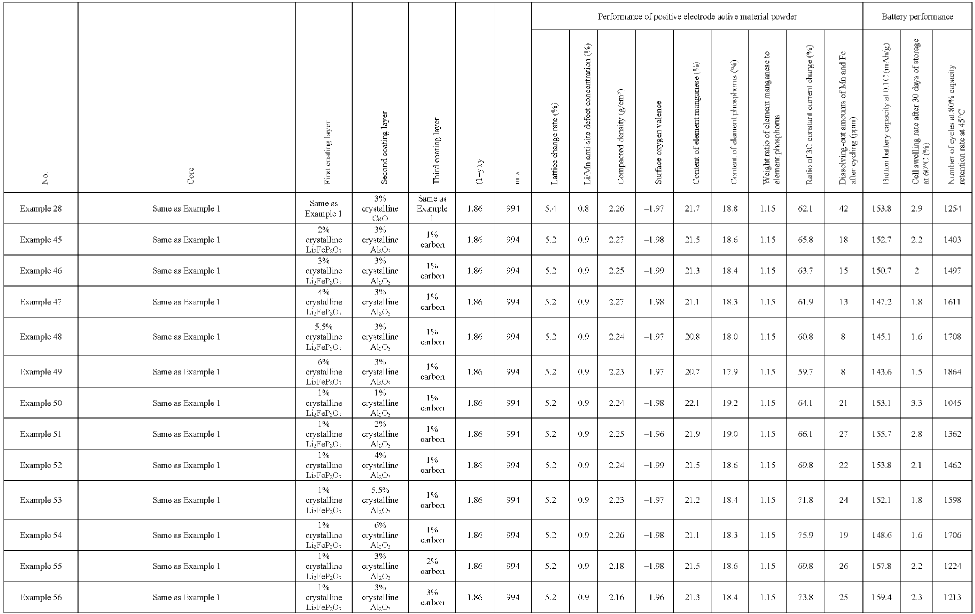

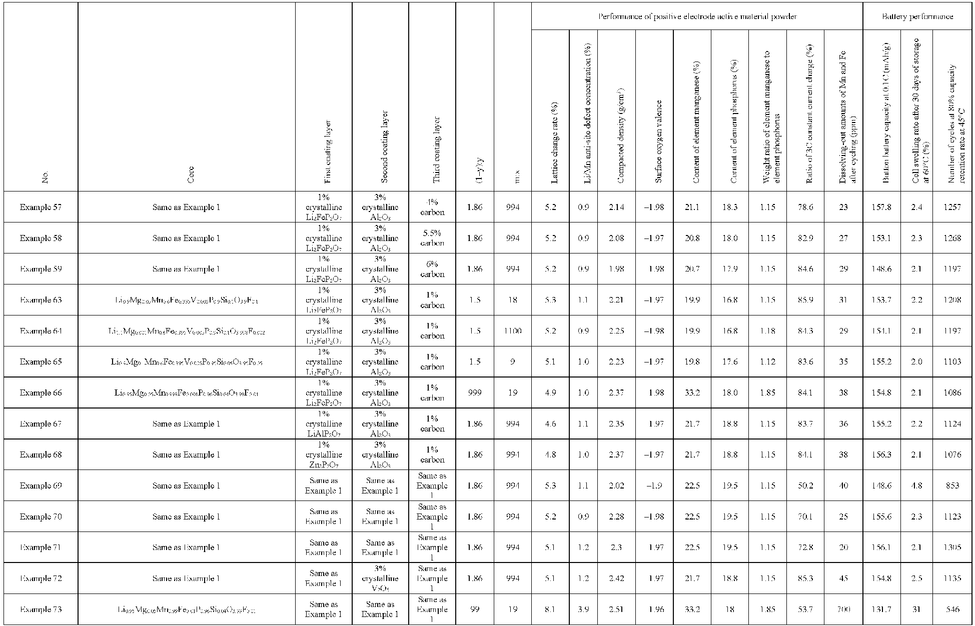

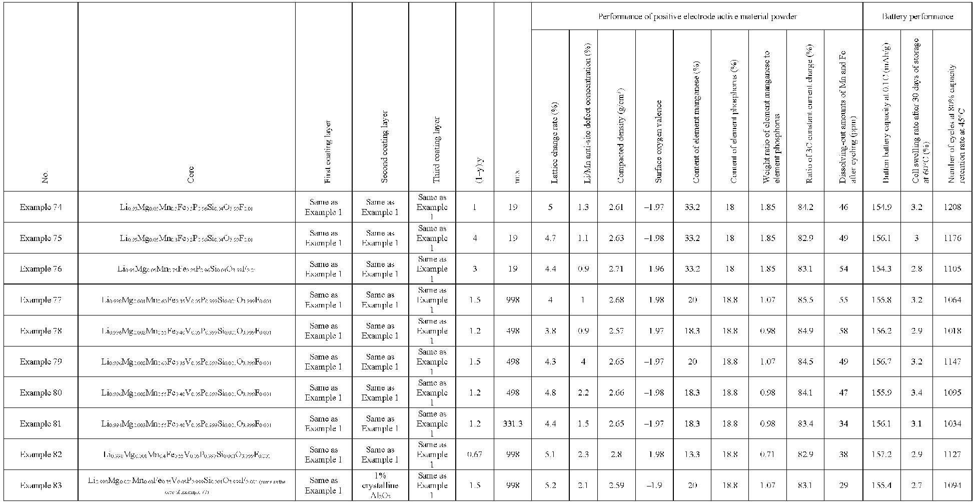

**Table 8: Interplanar spacing and included angle in crystal orientation of pyrophosphate in first coating layer**

| No. | Core | First coating layer | Second coating layer | Third coating layer | Interplanar spacing of pyrophosphate in first coating layer (nm) | Included angle of [111] crystal orientation of pyrophosphate in first coating layer (°) |
|---|---|---|---|---|---|---|
| Example 1 | Li_{0.994}Mo_{0.001}Mn_{0.65}Fe_{0.35}P_{0.999}Si_{0.001}O_{3.999}F_{0.001} | 1% crystalline Li₂FeP₂O₇ | 3% crystalline Al₂O₃ | 1% carbon | 0.303 | 29.496 |
| Example 2 | Li_{0.977}Mg_{0.001}Mn_{0.65}Fe_{0.34}Ti_{0.01}P_{0.999}N_{0.001}O_{3.999}F_{0.001} | 1% crystalline Li₂FeP₂O₇ | 3% crystalline Al₂O₃ | 1% carbon | 0.303 | 29.496 |
| Example 3 | Li_{0.992}W_{0.001}Mn_{0.65}Fe_{0.35}P_{0.999}S_{0.001}O_{3.999}F_{0.001} | 1% crystalline Li₂FeP₂O₇ | 3% crystalline Al₂O₃ | 1% carbon | 0.303 | 29.496 |
| Example 4 | Li_{0.997}Al_{0.001}Mn_{0.65}Fe_{0.35}P_{0.999}Si_{000.1}O_{3.999}Cl_{0.001} | 1% crystalline Li₂FeP₂O₇ | 3% crystalline Al₂O₃ | 1% carbon | 0.303 | 29.496 |
| Example 5 | Li_{0.993}Nb_{0.001}Mn_{0.65}Fe_{0.345}V_{0.005}P_{0.999}S_{0.001}O_{3.999}F_{0.001} | 1% crystalline Li₂FeP₂O₇ | 3% crystalline Al₂O₃ | 1% carbon | 0.303 | 29.496 |
| Example 6 | Li_{0.993}Nb_{0.001}Mn_{0.65}Fe_{0.34}V_{0.005}Mg_{0.005}P_{0.999}S_{0.001}O_{3.999}F_{0.001} | 1% crystalline Li₂FeP₂O₇ | 3% crystalline Al₂O₃ | 1% carbon | 0.303 | 29.496 |
| Example 7 | Li_{0.993}Nb_{0.001}Mn_{0.65}Fe_{0.34}V_{0.005}Co_{0.005}P_{0.999}S_{0.001}O_{3.999}F_{0.001} | 1% crystalline Li₂FeP₂O₇ | 3% crystalline Al₂O₃ | 1% carbon | 0.303 | 29.496 |
| Example 8 | Li_{0.993}Nb_{0.001}Mn_{0.65}Fe_{0.34}V_{0.005}Ni_{0.005}P_{0.999}S_{0.001}O_{3.999}F_{0.001} | 1% crystalline Li₂FeP₂O₇ | 3% crystalline Al₂O₃ | 1% carbon | 0.303 | 29.496 |
| Example 9 | Li_{0.991}Nb_{0.001}Mn_{0.65}Fe_{0.349}Ti_{0.001}P_{0.999}S_{0.001}O_{3.999}Q_{0.001} | 1% crystalline Li₂FeP₂O₇ | 3% crystalline Al₂O₃ | 1% carbon | 0.303 | 29.496 |
| Example 10 | Li_{0.995}Nb_{0.001}Mn_{0.65}Fe_{0.34}V_{0.005}Mg_{0.005}P_{0.999}Si_{0.001}O_{3.999}Br_{0.001} | 1% crystalline Li₂FeP₂O₇ | 3% crystalline Al₂O₃ | 1% carbon | 0.303 | 29.496 |
| Example 11 | Li_{0.998}Mg_{0.001}Mn_{0.65}Fe_{0.345}V_{0.005}P_{0.999}Si_{0.001}O_{3.999}Br_{0.001} | 1% crystalline Li₂FeP₂O₇ | 3% crystalline Al₂O₃ | 1% carbon | 0.303 | 29.496 |
| Example 21 | Same as Example 1 | Same as Example 1 | 3% crystalline CoO | Same as Example 1 | 0.303 | 29.496 |
| Example 22 | Same as Example 1 | Same as Example 1 | 3% crystalline NiO | Same as Example 1 | 0.303 | 29.496 |
| Example 23 | Same as Example 1 | Same as Example 1 | 3% crystalline CuO | Same as Example 1 | 0.303 | 29.496 |
| Example 24 | Same as Example 1 | Same as Example 1 | 3% crystalline ZnO | Same as Example 1 | 0.303 | 29.496 |
| Example 25 | Same as Example 1 | Same as Example 1 | 3% crystalline TiO₂ | Same as Example 1 | 0.303 | 29.496 |
| Example 26 | Same as Example 1 | Same as Example 1 | 3% crystalline MgO | Same as Example 1 | 0.303 | 29.496 |
| Example 27 | Same as Example 1 | Same as Example 1 | 3% crystalline ZrO₂ | Same as Example 1 | 0.303 | 29.496 |
| Example 28 | Same as Example 1 | Same as Example 1 | 3% crystalline CaO | Same as Example 1 | 0.303 | 29.496 |
| Example 45 | Same as Example 1 | 2% crystalline Li₂FeP₂O₇ | 3% crystalline Al₂O₃ | 1% carbon | 0.303 | 29.496 |
| Example 46 | Same as Example 1 | 3% crystalline Li₂FeP₂O₇ | 3% crystalline Al₂O₃ | 1% carbon | 0.303 | 29.496 |
| Example 47 | Same as Example 1 | 4% crystalline Li₂FeP₂O₇ | 3% crystalline Al₂O₃ | 1% carbon | 0.303 | 29.496 |
| Example 48 | Same as Example 1 | 5.5% crystalline Li₂FeP₂O₇ | 3% crystalline Al₂O₃ | 1% carbon | 0.303 | 29.496 |
| Example 49 | Same as Example 1 | 6% crystalline Li₂FeP₂O₇ | 3% crystalline Al₂O₃ | 1% carbon | 0.303 | 29.496 |
| Example 50 | Same as Example 1 | 1% crystalline Li₂FeP₂O₇ | 1% crystalline Al₂O₃ | 1% carbon | 0.303 | 29.496 |
| Example 51 | Same as Example 1 | 1% crystalline Li₂FeP₂O₇ | 2% crystalline Al₂O₃ | 1% carbon | 0.303 | 29.496 |
| Example 52 | Same as Example 1 | 1% crystalline Li₂FeP₂O₇ | 4% crystalline Al₂O₃ | 1% carbon | 0.303 | 29.496 |
| Example 53 | Same as Example 1 | 1% crystalline Li₂FeP₂O₇ | 5.5% crystalline Al₂O₃ | 1% carbon | 0.303 | 29.496 |
| Example 54 | Same as Example 1 | 1% crystalline Li₂FeP₂O₇ | 6% crystalline Al₂O₃ | 1% carbon | 0.303 | 29.496 |
| Example 55 | Same as Example 1 | 1% crystalline Li₂FeP₂O₇ | 3% crystalline Al₂O₃ | 2% carbon | 0.303 | 29.496 |
| Example 56 | Same as Example 1 | 1% crystalline Li₂FeP₂O₇ | 3% crystalline Al₂O₃ | 3% carbon | 0.303 | 29.496 |
| Example 57 | Same as Example 1 | 1% crystalline Li₂FeP₂O₇ | 3% crystalline Al₂O₃ | 4% carbon | 0.303 | 29.496 |
| Example 58 | Same as Example 1 | 1% crystalline Li₂FeP₂O₇ | 3% crystalline Al₂O₃ | 5.5% carbon | 0.303 | 29.496 |
| Example 59 | Same as Example 1 | 1% crystalline Li₂FeP₂O₇ | 3% crystalline Al₂O₃ | 6% carbon | 0.303 | 29.496 |
| Example 63 | Li_{0.9}Mg_{0.05}Mn_{0.6}Fe_{0.395}V_{0.005}P_{0.9}Si_{.1}O_{3.9}F_{0.1} | 1% crystalline Li₂FeP₂O₇ | 3% crystalline Al₂O₃ | 1% carbon | 0.303 | 29.496 |
| Example 64 | Li_{1.1}Mg_{0.001}Mn_{0.6}Fe_{0.395}V_{0.005}P_{0.9}Si_{0.1}O_{3.998}F_{0.002} | 1% crystalline Li₂FeP₂O₇ | 3% crystalline Al₂O₃ | 1% carbon | 0.303 | 29.496 |
| Example 65 | Li_{0.9}Mg_{0.1}M_{0.6}Fe_{0.395}V_{0.005}P_{0.95}Si_{0.05}O_{3.95}F_{0.05} | 1% crystalline Li₂FeP₂O₇ | 3% crystalline Al₂O₃ | 1% carbon | 0.303 | 29.496 |
| Example 66 | Li_{0.95}Mg_{0.05}Mn_{0.999}Fe_{0.001}P_{0.9e}Si_{0.04}O_{3.99}F_{0.01} | 1% crystalline Li₂FeP₂O₇ | 3% crystalline Al₂O₃ | 1% carbon | 0.303 | 29.496 |
| Example 69 | Same as Example 1 | Same as Example 1 | Same as Example 1 | Same as Example 1 | 0.303 | 29.496 |
| Example 70 | Same as Example 1 | Same as Example 1 | Same as Example 1 | Same as Example 1 | 0.303 | 29.496 |
| Example 71 | Same as Example 1 | Same as Example 1 | Same as Example 1 | Same as Example 1 | 0.303 | 29.496 |
| Example 72 | Same as Example 1 | Same as Example 1 | 3% crystalline V₂O₅ | Same as Example 1 | 0.303 | 29.496 |
| Example 73 | Li_{0.95}Mg_{0.05}Mn_{0.99}Fe_{0.01}P_{0.96}Si_{0.04}O_{3.99}F_{0.01} | Same as Example 1 | Same as Example 1 | Same as Example 1 | 0.303 | 29.496 |
| Example 74 | Li_{0.95}Mg_{0.05}Mn_{0.5}Fe_{0.5}P_{0.96}Si_{0.04}O_{3.99}F_{0.01} | Same as Example 1 | Same as Example 1 | Same as Example 1 | 0.303 | 29.496 |
| Example 75 | Li_{0.95}Mg_{0.05}Mn_{0.8}Fe_{0.2}P_{0.96}Si_{0.04}O_{3.99}F_{0.01} | Same as Example 1 | Same as Example 1 | Same as Example 1 | 0.303 | 29.496 |
| Example 76 | Li_{0.95}Mg_{0.05}Mn_{0.75}Fe_{0.25}P_{0.96}Si_{0.04}O_{3.99}F_{0.01} | Same as Example 1 | Same as Example 1 | Same as Example 1 | 0.303 | 29.496 |
| Example 77 | Li_{0.998}Mg_{0.001}Mn_{0.60}Fe_{0.35}V_{0.05}P_{0.999}Si_{0.001}O_{3.999}F_{0.001} | Same as Example 1 | Same as Example 1 | Same as Example 1 | 0.303 | 29.496 |
| Example 78 | Li_{0.996}Mg_{0.002}Mn_{0.55}Fe_{0.40}V_{0.05}P_{0.999}Si_{0.001}O_{3.999}F_{0.001} | Same as Example 1 | Same as Example 1 | Same as Example 1 | 0.303 | 29.496 |
| Example 79 | Li_{0.996}Mg_{0.002}Mn_{0.60}Fe_{0.35}V_{0.05}P_{0.999}Si_{0.001}O_{3.999}F_{0.001} | Same as Example 1 | Same as Example 1 | Same as Example 1 | 0.303 | 29.496 |
| Example 80 | Li_{0.996}Mg_{0.002}Mn_{0.55}Fe_{0.40}V_{0.05}P_{0.999}Si_{0.001}O_{3.999}F_{0.001} | Same as Example 1 | Same as Example 1 | Same as Example 1 | 0.303 | 29.496 |
| Example 81 | Li_{0.994}Mg_{0.003}Mn_{0.55}Fe_{0.40}V_{0.05}P_{0.999}Si_{0.001}O_{3.999}F_{0.001} | Same as Example 1 | Same as Example 1 | Same as Example 1 | 0.303 | 29.496 |
| Example 82 | Li_{0.998}Mg_{0.001}Mn_{0.4}Fe_{0.55}V_{0.05}P_{0.999}Si_{0.001}O_{3.999}F_{0.001} | Same as Example 1 | Same as Example 1 | Same as Example 1 | 0.303 | 29.496 |
| Example 83 | Li_{0.998}Mg_{0.001}Mn_{0 .60}Fe_{0.35}V_{0.05}P_{0.999}Si_{0.001}O_{3.999}F_{0.001} (same as the core of Example 77) | Same as Example 1 | 1% crystalline Al₂O₃ | Same as Example 1 | 0.303 | 29.496 |

It can be learned from Tables 7 and 8 that compared with the comparative examples, the examples of this application achieve smaller lattice change rate, smaller Li/Mn anti-site defect concentration, greater compacted density, surface oxygen valence closer to -2 valence, less dissolving-out amounts of Mn and Fe after cycles, and better battery performance, for example, higher capacity of button battery, better high-temperature storage performance, higher safety, and better cycling performance.

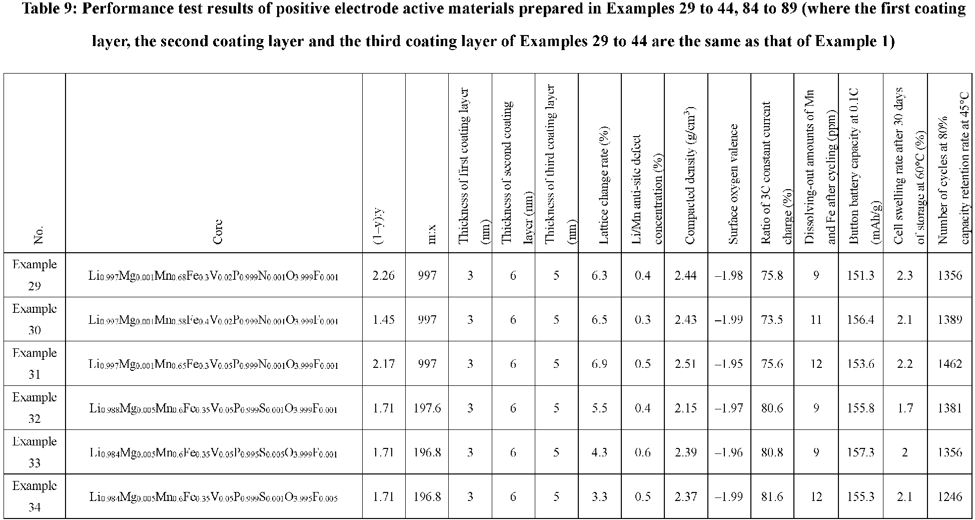

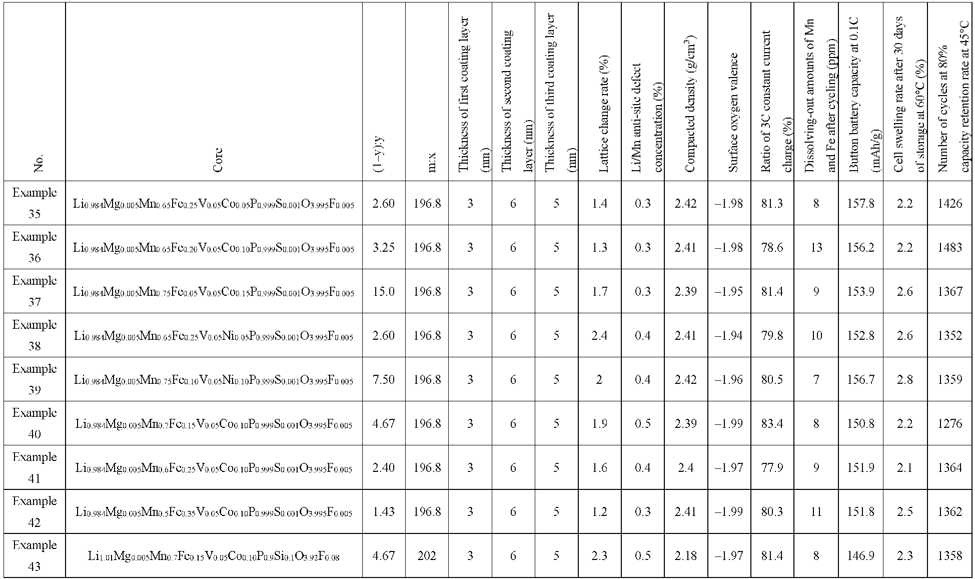

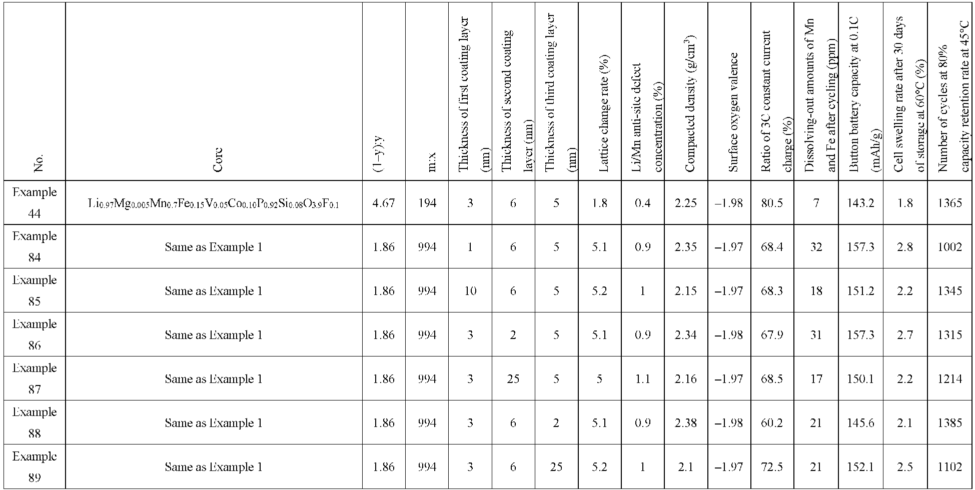

It can be learned from Table 9 that through fully doping at the Li site, manganese site, phosphorus site, and O site of lithium manganese iron phosphate and three-layer enveloping, this application achieves smaller lattice change rate, smaller Li/Mn anti-site defect concentration, greater compacted density, surface oxygen valence closer to -2 valence, less dissolving-out amounts of Mn and Fe after cycles, and better battery performance, for example, higher capacity of button battery, better high-temperature storage performance, higher safety, and better cycling performance.

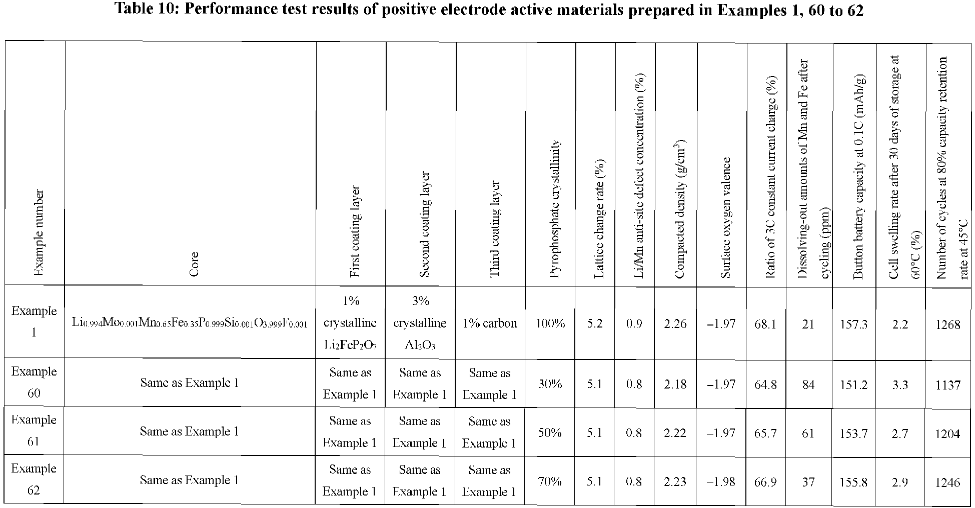

It can be learned from Table 10 that with the increase of the crystallinity of pyrophosphate in the positive electrode active material, the compacted density gradually increases, the 3C charge constant current ratio increases, the dissolving-out amounts of Mn and Fe decrease after the cycle, a capacity of button battery increases, and high-temperature storage performance, safety performance, and cycling performance are improved.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A positive electrode active material having a core-shell structure, comprising a core and a shell enveloping the core;
the core containing LiₘAₓMn_{1-y}B_{y}P_{1-z}C_{z}O₄₋ₙDₙ, wherein m is selected from any value in the range of 0.9 to 1.1, x is selected from any value in the range of 0.001 to 0.1, y is selected from any value in the range of 0.001 to 0.6, or optionally selected from any value in the range of 0.001 to 0.5, z is selected from any value in the range of 0.001 to 0.1, n is selected from any value in the range of 0.001 to 0.1, A is selected from one or more elements of Zn, Al, Na, K, Mg, Nb, Mo, and W, or optionally selected from one or more elements of Al, Mg, Nb, Mo, and W, B is selected from one or more elements of Ti, V, Zr, Fe, Ni, Mg, Co, Ga, Sn, Sb, Nb, and Ge, or optionally selected from one or more elements of Ti, V, Fe, Ni, Mg, and Co, C is selected from one or more elements of B, S, Si, and N, or optionally selected from one or more elements of S, Si, and N, and D is selected from one or more elements of S, F, Cl, and Br, or optionally selected from one or more elements of F, Cl, and Br; and
the shell comprising a first coating layer enveloping the core, a second coating layer enveloping the first coating layer, and a third coating layer enveloping the second coating layer; wherein
the first coating layer contains a crystalline pyrophosphate LiₐMP₂O₇ and/or M_{b}(P₂O₇)_{c}, wherein a is greater than 0 and less than or equal to 2, b is any value in the range of 1 to 4, c is any value in the range of 1 to 3, and each M in the crystalline pyrophosphates LiₐMP₂O₇ and M_{b}(P₂O₇)_{c} is independently selected from one or more elements of Fe, Ni, Mg, Co, Cu, Zn, Ti, Ag, Zr, Nb, and Al, or optionally selected from one or more elements of Fe, Ni, Mg, Co, Cu, Zn, Ti, Ag, Zr, and Al;
the second coating layer contains an oxide M'_{d}Oₑ, wherein d is greater than 0 and less than or equal to 2, e is greater than 0 and less than or equal to 5, M' is selected from one or more elements of alkali metals, alkaline earth metals, transition metals, group IIIA elements, group IVA elements, lanthanide elements, and Sb, optionally selected from one or more elements of Li, Be, B, Na, Mg, Al, Si, P, S, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La, and Ce, or more optionally selected from one or more elements of Mg, Al, Ca, Ti, V, Co, Ni, Cu, Zn, and Zr; and
the third coating layer contains carbon.

2. The positive electrode active material according to claim 1, wherein
a ratio of 1-y to y ranges from 0.67 to 999, optionally from 1 to 4, or more optionally from 1.5 to 3; and/or
a ratio of m to x ranges from 9 to 1100, or optionally from 190 to 998.

3. The positive electrode active material according to claim 1 or 2, wherein
x is any value in the range of 0.001 to 0.005; and/or
y is any value in the range of 0.01 to 0.5, or optionally any value in the range of 0.25 to 0.5; and/or
z is any value in the range of 0.001 to 0.005; and/or
n is any value in the range of 0.001 to 0.005.

4. The positive electrode active material according to any one of claims 1 to 3, wherein carbon in the third coating layer is a mixture of SP2 carbon and SP3 carbon; or optionally a molar ratio of SP2 carbon to SP3 carbon is any value in the range of 0.07 to 13, more optionally any value in the range of 0.1 to 10, or further optionally any value in the range of 2.0 to 3.0.

5. The positive electrode active material according to any one of claims 1 to 4, wherein
based on a weight of the core, a coating amount of the first coating layer is greater than 0 and less than or equal to 6wt%, optionally greater than 0 and less than or equal to 5.5wt%, or more optionally greater than 0 and less than or equal to 2wt%; and/or
based on the weight of the core, a coating amount of the second coating layer is greater than 0 and less than or equal to 6wt%, optionally greater than 0 and less than or equal to 5.5wt%, or more optionally from 2wt% to 4wt%; and/or
based on the weight of the core, a coating amount of the third coating layer is greater than 0 and less than or equal to 6wt%, optionally greater than 0 and less than or equal to 5.5wt%, or more optionally greater than 0 and less than or equal to 2wt%.

6. The positive electrode active material according to any one of claims 1 to 5, wherein
a thickness of the first coating layer ranges from 1 nm to 10 nm; and/or
a thickness of the second coating layer ranges from 2 nm to 25 nm, or optionally from 2 nm to 15 nm; and/or
a thickness of the third coating layer ranges from 2 nm to 25 nm.

7. The positive electrode active material according to any one of claims 1 to 6, wherein
based on a weight of the positive electrode active material,
a content of element manganese is in the range of 10wt% to 35wt%, optionally in the range of 13.3wt% to 33.2wt%, or more optionally in the range of 15wt% to 30wt%; and/or
a content of element phosphorus is in the range of 12wt% to 25wt%, optionally in the range of 15wt% to 20wt%, or more optionally in the range of 16.8wt% to 19.5wt%; and
optionally, a weight ratio of element manganese to element phosphorus is in the range of 0.71 to 1.85, more optionally in the range of 0.90 to 1.25, or further optionally in the range of 0.95 to 1.20.

8. The positive electrode active material according to any one of claims 1 to 7, wherein
the crystalline pyrophosphate in the first coating layer has an interplanar spacing in the range of 0.293 nm to 0.470 nm and an included angle in the range of 18.00° to 32.00° in the [111] crystal orientation;
optionally, the crystalline pyrophosphate in the first coating layer has an interplanar spacing in the range of 0.300 nm to 0.310 nm; and/or
the crystalline pyrophosphate in the first coating layer has an included angle in the range of 29.00° to 30.00° in the [111] crystal orientation.

9. The positive electrode active material according to any one of claims 1 to 8, wherein a lattice change rate of the positive electrode active material before and after complete deintercalation of lithium is lower than 8.1%, optionally lower than 4%, more optionally lower than 3.8%, or further optionally from 2.0% to 3.8%.

10. The positive electrode active material according to any one of claims 1 to 9, wherein a Li/Mn anti-site defect concentration of the positive electrode active material is lower than 4%, optionally lower than 2.2%, or more optionally from 1.5% to 2.2%.

11. The positive electrode active material according to any one of claims 1 to 10, wherein a compacted density of the positive electrode active material under 3 tons is greater than 1.98 g/cm³, optionally greater than 2.2 g/cm³, or more optionally greater than 2.2 g/cm³ and less than 2.8 g/cm³.

12. The positive electrode active material according to any one of claims 1 to 11, wherein a surface oxygen valence of the positive electrode active material is lower than -1.90, or optionally from -1.90 to -1.98.

13. A preparation method of positive electrode active material, comprising the following steps:
a step of providing a core material: the core material containing LiₘAₓMn_{1-y}B_{y}P_{1-z}C_{z}O₄₋ₙDₙ, wherein m is selected from any value in the range of 0.9 to 1.1, x is selected from any value in the range of 0.001 to 0.1, y is selected from any value in the range of 0.001 to 0.6, or optionally selected from any value in the range of 0.001 to 0.5, z is selected from any value in the range of 0.001 to 0.1, n is selected from any value in the range of 0.001 to 0.1, A is selected from one or more elements of Zn, Al, Na, K, Mg, Nb, Mo, and W, or optionally selected from one or more elements of Al, Mg, Nb, Mo, and W, B is selected from one or more elements of Ti, V, Zr, Fe, Ni, Mg, Co, Ga, Sn, Sb, Nb, and Ge, or optionally selected from one or more elements of Ti, V, Fe, Ni, Mg, and Co, C is selected from one or more elements of B, S, Si, and N, or optionally selected from one or more elements of S, Si, and N, and D is selected from one or more elements of S, F, Cl, and Br, or optionally selected from one or more elements of F, Cl, and Br; and
a first enveloping step: providing a first mixture containing a pyrophosphate LiₐMP₂O₇ and/or M_{b}(P₂O₇)_{c}, and mixing the core material and the first mixture for drying and sintering to obtain a material enveloped by a first coating layer, wherein a is greater than 0 and less than or equal to 2, b is any value in the range of 1 to 4, c is any value in the range of 1 to 3, and each M in the pyrophosphates LiₐMP₂O₇ and M_{b}(P₂O₇)_{c} is independently selected from one or more elements of Fe, Ni, Mg, Co, Cu, Zn, Ti, Ag, Zr, Nb, and Al, or optionally selected from one or more elements of Fe, Ni, Mg, Co, Cu, Zn, Ti, Ag, Zr, and Al;
a second enveloping step: providing a second mixture containing an oxide M'_{d}Oₑ, and mixing the material coated by the first coating layer and the second mixture for drying and sintering to obtain a material enveloped by two coating layers, wherein d is greater than 0 and less than or equal to 2, e is greater than 0 and less than or equal to 5, M' is selected from one or more elements of alkali metals, alkaline earth metals, transition metals, group IIIA elements, group IVA elements, lanthanide elements, and Sb, optionally selected from one or more elements of Li, Be, B, Na, Mg, Al, Si, P, S, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La, and Ce, or more optionally selected from one or more elements of Mg, Al, Ca, Ti, V, Co, Ni, Cu, Zn, and Zr; and
a third enveloping step: providing a third mixture containing a source of carbon, and mixing the material enveloped by the two coating layers and the third mixture for drying and sintering to obtain a positive electrode active material;
wherein the positive electrode active material has a core-shell structure comprising the core and a shell enveloping the core, the core containing LiₘAₓMn_{1-y}B_{y}P_{1-z}C_{z}O₄₋ₙDₙ, the shell comprising the first coating layer enveloping the core, a second coating layer enveloping the first coating layer, and a third coating layer enveloping the second coating layer, the first coating layer containing a crystalline pyrophosphate LiₐMP₂O₇ and/or M_{b}(P₂O₇)_{c}, the second coating layer containing an oxide M'_{d}Oₑ, and the third coating layer containing carbon.

14. The preparation method according to claim 13, wherein the step of providing a core material comprises the following steps:
step (1): mixing a source of manganese, a source of element B, an acid, and an optional solvent to obtain a mixture; and
step (2): mixing the mixture with a source of lithium, a source of phosphorus, a source of element A, a source of element C, a source of element D, and an optional solvent for drying and sintering to obtain the core material containing LiₘAₓMn_{1-y}B_{y}P_{1-z}C_{z}O₄₋ₙDₙ; wherein
optionally, in step (1), the mixing is carried out at 60°C to 120°C; and/or, in the step (1), the mixing is carried out by stirring at 200 rpm to 800 rpm;
optionally, in step (2), the mixing is carried out for 8 hours to 15 hours; and
optionally, in step (2), the sintering is carried out at 600°C to 900°C for 6 hours to 14 hours.

15. The preparation method according to claim 13 or 14, wherein
in the first enveloping step, the first mixture is obtained by mixing a source of element M, a source of phosphorus, an acid, an optional source of lithium, and an optional solvent; and/or
in the second enveloping step, the second mixture is obtained by mixing a source of element M' and a solvent; and/or
in the third enveloping step, the third mixture is obtained by mixing a source of carbon and a solvent;
optionally, in the first enveloping step, the source of element M, the source of phosphorus, the acid, the optional source of lithium, and the optional solvent are mixed at room temperature for 1h to 5h, then heated to 50°C to 120°C and kept at this temperature for mixing for 2h to 10h, the foregoing mixing all being carried out at pH 3.5 to pH 6.5; and
optionally, in the second enveloping step, the source of element M' and the solvent are mixed at room temperature for 1h to 10h, then heated to 60°C to 150°C and kept at this temperature for mixing for 2h to 10h.

16. The preparation method according to any one of claims 13 to 15, wherein
the source of element A is selected from one or more of monomer, oxide, phosphate, oxalate, carbonate, and sulfate of element A; and/or
the source of element B is selected from one or more of monomer, oxide, phosphate, oxalate, carbonate, and sulfate of element B; and/or
the source of element C is selected from one or more of sulfate, borate, nitrate, and silicate of element C; and/or
the source of element D is selected from one or more of monomer and ammonium salt of element D.

17. The preparation method of positive electrode active material according to any one of claims 13 to 16, wherein
in the first enveloping step, the sintering is carried out at 650°C to 800°C for 2 hours to 6 hours; and/or
in the second enveloping step, the sintering is carried out at 500°C to 700°C for 6 hours to 10 hours; and/or
in the third enveloping step, the sintering is carried out at 700°C to 800°C for 6 hours to 10 hours.

18. A positive electrode plate, comprising a positive electrode current collector and a positive electrode film layer provided on at least one surface of the positive electrode current collector, wherein the positive electrode film layer comprises the positive electrode active material according to any one of claims 1 to 12 or a positive electrode active material prepared by the preparation method according to any one of claims 13 to 17; or optionally, based on a total weight of the positive electrode film layer, a content of the positive electrode active material in the positive electrode film layer is 90wt% to 99.5wt%, or more optionally 95wt% to 99.5wt%.

19. A secondary battery, comprising the positive electrode active material according to any one of claims 1 to 12 or a positive electrode active material prepared by the preparation method according to any one of claims 13 to 17 or the positive electrode plate according to claim 18.

20. A battery module, comprising the secondary battery according to claim 19.

21. A battery pack, comprising the battery module according to claim 20.

22. An electric apparatus, comprising at least one of the secondary battery according to claim 19, the battery module according to claim 20, and the battery pack according to claim 21.
